(19) **Europäisches Patentamt / European Patent Office / Office européen des brevets**

(11) **EP 4 327 156 B1**

(12) **EUROPÄISCHE PATENTSCHRIFT**

(45) Veröffentlichungstag und Bekanntmachung des Hinweises auf die Patenterteilung:
**24.12.2025 Patentblatt 2025/52**

(21) Anmeldenummer: **22711540.9**

(22) Anmeldetag: **09.03.2022**

(51) Internationale Patentklassifikation (IPC):
**G02B 27/01** (2006.01)  **B32B 17/10** (2006.01)
**B60S 1/02** (2006.01)  **H05B 3/86** (2006.01)
**G02B 27/28** (2006.01)  **G02B 7/00** (2021.01)

(52) Gemeinsame Patentklassifikation (CPC):
**B32B 17/10458; B32B 17/10036; B32B 17/10229; B32B 17/10761; G02B 7/008; G02B 27/0101; G02B 27/286; H05B 3/86;** G02B 2027/0194

(86) Internationale Anmeldenummer:
**PCT/EP2022/055998**

(87) Internationale Veröffentlichungsnummer:
**WO 2022/223198 (27.10.2022 Gazette 2022/43)**

(54) **PROJEKTIONSANORDNUNG MIT EINER VERBUNDSCHEIBE FÜR EIN HEAD-UP-DISPLAY MIT BEHEIZBAREM SENSORBEREICH**

PROJECTION DEVICE WITH COMPOSITE PANE FOR A HEADS-UP DISPLAY, COMPRISING A HEATABLE SENSOR REGION

DISPOSITIF DE PROJECTION AVEC UN VITRE COMPOSITE POUR UN AFFICHAGE TÊTE HAUTE, COMPRENANT UNE ZONE DE DÉTECTION POUVANT ÊTRE CHAUFFÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.04.2021 EP 21169769**

(43) Veröffentlichungstag der Anmeldung:
**28.02.2024 Patentblatt 2024/09**

(73) Patentinhaber: **Saint-Gobain Sekurit France**
**60150 Thourotte (FR)**

(72) Erfinder:
• SCHMADTKE, Lisa
  52146 Würselen (DE)
• HAGEN, Jan
  53123 Bonn (DE)
• GALLINELLI, Thomas
  71200 Le Creusot (FR)
• GILLESSEN, Stephan
  52477 Alsdorf (DE)
• DO ROSARIO, Jefferson
  52064 Aachen (DE)

(74) Vertreter: **Feist, Florian Arno**
**Saint-Gobain Sekurit Deutschland GmbH SGR-Germany, Patentabteilung Glasstraße 1 52134 Herzogenrath (DE)**

(56) Entgegenhaltungen:
EP-B1- 2 510 745          WO-A1-2020/083649
DE-T5- 112019 002 709

**Beschreibung**

Die Erfindung betrifft eine Projektionsanordnung für ein Head-Up-Display (HUD) umfassend eine Verbundscheibe mit einem beheizbaren Sensorbereich, einen Sensor und einen HUD-Projektor.

Moderne Automobile werden in zunehmendem Maße mit sogenannten Head-Up-Displays (HUDs) ausgestattet. Mit einem HUD-Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Es sind HUDs bekannt, bei denen der HUD-Projektor mit p-polarisierter Strahlung betrieben wird. Da der typische Einstrahlwinkel in Fahrzeugen etwa 65° beträgt und damit nahe dem Brewster-Winkel für einen Luft-Glas-Übergang liegt (56,5° für Kalk-Natron-Glas), tritt an den Scheibenoberflächen keine nennenswerte Reflexion auf. Dadurch wird das Auftreten eines versetzten Geisterbildes ("Ghost") vermieden, welches bei HUD-Projektoren mit s-polarisierter Strahlung aufgrund der Reflexion an beiden externen Oberflächen auftritt und dem typischerweise mit kostspieligen keilförmigen Folien oder Glasscheiben abgeholfen wird, um die beiden Oberflächen mit einem Winkel zueinander anzuordnen, so dass das Geisterbild mit dem Hauptbild überlagert wird. Als Reflexionsfläche für die p-polarisierte Strahlung weist die Windschutzscheibe stattdessen eine Reflexionsbeschichtung auf. Solche HUDs sind beispielsweise in DE102014220189A1, WO2019046157A1 und US2017242247A1 offenbart.

WO2020083649A1 sowie die nachveröffentlichte internationale Anmeldung WO2021104800A1 offenbaren eine Windschutzscheibe mit einer Reflexionsbeschichtung für die p-polarisierte Strahlung eines HUD-Projektors. Die Reflexionsbeschichtung weist eine einzelne Silberschicht auf, wodurch eine hohe Transparenz gewährleistet wird. Durch eine gezielte Auswahl der ober- und unterhalb dieser Silberschicht befindlichen dielektrischen Schichtmodule werden gute Reflexionseigenschaften gegenüber der p-polarisierten Strahlung erreicht, insbesondere ein hoher mittlerer Reflexionsgrad und eine farbneutrale Darstellung. Neben HUDs finden auch Sensoren an Windschutzscheiben eine immer weitere Verbreitung.

Beispiele hierfür sind Videokameras, Nachtsichtkameras, Restlichtverstärker, Laserentfernungsmesser, passive Infrarotdetektoren, Radar- oder Lidar-Sensoren, welche auch beispielsweise kombiniert im Rahmen von Fahrerassistenzsystemen (ADAS, *Advanced Driver Assistance Systems*) eingesetzt werden können. Der Sensor ist dabei innenraumseitig an der Windschutzscheibe befestigt und einem Sensorbereich (typischerweise oberhalb des zentralen Sichtfeldes) zugeordnet und dazu geeignet, elektromagnetische Strahlung, die von außen durch den Sensorbereich tritt, zu detektieren. Für eine optimale Funktion der Sensoren muss der Sensorbereich bestimmte optische Eigenschaften aufweisen. Dazu gehören eine relativ hohe Transmission im roten Spektralbereich (etwa 600 nm bis 700 nm), eine hohe Transmission von Licht, welches in einem relativ flachen Winkel auf die Windschutzscheibe trifft, sowie eine relativ hohe Transmission von p-polarisierter Strahlung gegenüber s-polarisierter Strahlung (zur Unterdrückung von Reflexionen an beispielsweise einer nassen Fahrbahn). Ist die Windschutzscheibe mit einer elektrisch leitfähigen Beschichtung ausgestattet, so beeinflusst diese typischerweise die besagten optischen Eigenschaften negativ. Daher wird die Beschichtung im Sensorfeld häufig entfernt, wie beispielsweise in WO2010136400A1 offenbart, was die Herstellung der Windschutzscheibe aufwändiger gestaltet.

Die nachveröffentlichte internationale Anmeldung WO2022089921A1 offenbart eine Windschutzscheibe mit einer Reflexionsbeschichtung für die p-polarisierte Strahlung eines HUD-Projektors. Die Reflexionsbeschichtung weist auch hier eine einzelne Silberschicht auf. Die Windschutzscheibe weist außerdem ein Sensorfeld auf, welches ebenfalls mit der Reflexionsbeschichtung bedeckt ist.

Es ist zudem wünschenswert, den Sensorbereich beheizbar auszubilden, so dass er bei Bedarf von Eis, Frost, Tau oder sonstigem Feuchtigkeitsbeschlag befreit werden kann. Beispielsweise können in einem unbeschichteten Sensorbereich Heizdrähte oder aufgedruckte Heizleiter angeordnet werden, wie beispielsweise aus EP2510745B1 oder WO2012031907A1 offenbart. Solche an sich opaken Heizleiter setzen aber die Lichttransmission herab und können zu unerwünschten optischen Effekten führen, beispielweise Streueffekte, wodurch die Funktionsfähigkeit des Sensors negativ beeinfluss wird.

Die nachveröffentlichte internationale Anmeldung WO2022157022A1 offenbart eine Windschutzscheibe mit einem beheizbaren Sensorfeld unter Verwendung einer beheizbaren Folie. Die nachveröffentlichte internationale Anmeldung WO2022136102A1 offenbart eine Windschutzscheibe mit einer elektrisch leitfähigen Beschichtung auf Basis eines transparenten, leitfähigen Oxids (TCO, *transparent conductive oxide*), welche verwendet wird, um ein Sensorfeld zu beheizen.

Es besteht weiter Bedarf an Verbundscheiben, welche als Projektionsfläche für eine HUD mit p-polarisierter Strahlung verwendet werden können und daher eine Reflexionsbeschichtung aufweisen und welche mit einem Sensorfeld ausgestattet sind, ohne dass die Reflexionsbeschichtung im Sensorfeld entfernt werden muss. Es soll eine möglichst einfache Beheizung des Sensorfelds möglich sein und die Verbundscheibe soll als Fahrzeugscheibe, insbesondere als Windschutzscheibe einsetzbar sein. Der vorliegenden Erfindung liegt die Aufgabe zugrunde, eine solche verbesserte Verbundscheibe bereitzustellen.

Die Aufgabe der vorliegenden Erfindung wird erfindungsgemäß durch eine Projektionsanordnung mit einer Verbundscheibe für ein Head-Up-Display (HUD) mit beheizbarem Sensorbereich gemäß Anspruch 1 gelöst. Bevorzugte Ausführungen gehen aus den Unteransprüchen hervor.

Erfindungsgemäß wird p-polarisierte Strahlung zur Erzeugung des HUD-Bildes verwendet und die Verbundscheibe weist eine elektrisch leifähige Beschichtung (Reflexionsbeschichtung) auf, welche p-polarisierte Strahlung hinreichend reflektiert. Da der für HUD-Projektionsanordnungen typische Einfallswinkel von etwa 65° dem Brewsterwinkel für einen Luft-Glas-Übergang (56,5°, Kalk-Natron-Glas) relativ nahekommt, wird p-polarisierte Strahlung von den Scheibenoberflächen kaum reflektiert, sondern hauptsächlich von der leitfähigen Beschichtung. Geisterbilder treten daher nicht oder kaum wahrnehmbar auf, so dass auf die Verwendung einer kostspieligen Keilfolie verzichtet werden kann. Außerdem ist das HUD-Bild auch für Träger von polarisationsselektiven Sonnenbrillen erkennbar, welche typischerweise nur p-polarisierte Strahlung passieren lassen und s-polarisierte Strahlung blocken. Die erfindungsgemäße Reflexionsbeschichtung bewirkt eine hohe Reflektivität gegenüber p-polarisierter Strahlung im Spektralbereich von 450 nm bis 650 nm, der für HUD-Darstellungen relevant ist (HUD-Projektoren arbeiten typischerweise mit den Wellenlängen 473 nm, 550 nm und 630 nm (RGB)). Dadurch wird ein intensitätsstarkes HUD-Bild erreicht. Die einzelne Silberschicht setzt die Lichttransmission nicht übermäßig herab, so dass die Scheibe weiterhin als Windschutzscheibe verwendet werden kann. Das erfindungsgemäße Verhältnis der optischen Dicken der oberen und unteren dielektrischen Schichtenfolge bewirkt eine Glättung des Reflexionsspektrums, so dass eine farbneutrale Darstellung gewährleistet ist. Die vorteilhaften Reflexionseigenschaften, insbesondere die Gleichmäßigkeit des Spektrums, erstrecken sich sogar über den HUD-relevanten Spektralbereich hinaus auf einen Spektralbereich von 400 nm bis 680 nm, so dass neben einer guten HUD-Darstellung ein positiver Gesamteindruck der Scheibe erreicht wird ohne störenden Farbstich.

Es hat sich darüber hinaus überraschend gezeigt, dass die Reflexionsbeschichtung mit üblichen Sensoren kompatibel ist, sie daher nicht im Bereich des Sensorbereichs entfernt werden muss. Die Reflexionsbeschichtung weist insbesondere eine relativ hohe Transmission im roten Spektralbereich auf, eine hohe Transmission von Licht, welches in einem relativ flachen Winkel auf die Verbundscheibe trifft, sowie eine relativ hohe Transmission von p-polarisierter Strahlung gegenüber s-polarisierter Strahlung, so dass für den Sensor störende Reflexionen unterdrückt werden. Weiter hat sich gezeigt, dass die Reflexionsbeschichtung einen geeigneten Flächenwiderstand aufweist, um den Sensorbereich dadurch zu beheizen, dass sie beidseitig des Sensorbereichs mit Sammelleitern elektrisch kontaktiert wird, so dass ein Heizstrom durch den Sensorbereich geleitet wird. Das sind große Vorteile der vorliegenden Erfindung.

Die Verbundscheibe der erfindungsgemäßen Projektionsanordnung ist als Reflexionsfläche für ein HUD vorgesehen und weist einen beheizbaren Sensorbereich auf. Die Verbundscheibe ist bevorzugt eine Fahrzeugscheibe, insbesondere eine Fensterscheibe eines Kraftfahrzeugs, bevorzugt eines Personen- oder Lastkraftwagens, Die Verbundscheibe ist besonders bevorzugt eine Windschutzscheibe. Die Verbundscheibe kann grundsätzlich aber auch eine Seitenscheibe oder Heckscheibe eines Fahrzeugs sein.

Die Verbundscheibe der erfindungsgemäßen Projektionsanordnung umfasst eine Außenscheibe und eine Innenscheibe, die über eine thermoplastische Zwischenschicht miteinander verbunden sind. Die Verbundscheibe ist dafür vorgesehen, in einer Fensteröffnung (insbesondere eines Fahrzeugs) den Innenraum gegenüber der äußeren Umgebung abzutrennen. Mit Innenscheibe wird im Sinne der Erfindung die dem Innenraum zugewandte Scheibe der Verbundscheibe bezeichnet. Mit Außenscheibe wird die der äußeren Umgebung zugewandte Scheibe bezeichnet.

Die Verbundscheibe weist eine Oberkante (Oberkantenfläche) und eine Unterkante (Unterkantenfläche) auf sowie zwei dazwischen verlaufende Seitenkanten (Seitenkantenfläche). Mit Oberkante wird diejenige Kante (Kantenfläche) bezeichnet, welche dafür vorgesehen ist, in Einbaulage nach oben zu weisen. Mit Unterkante wird diejenige Kante (Kantenfläche) bezeichnet, welche dafür vorgesehen ist, in Einbaulage nach unten zu weisen. Die Oberkante wird häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante (Kantenfläche). Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und über beziehungswiese durch die thermoplastische Zwischenschicht miteinander verbunden.

Die Verbundscheibe der erfindungsgemäßen Projektionsanordnung weist einen HUD-Bereich und einen Sensorbereich auf. Der HUD-Bereich ist zur Bestrahlung durch einen HUD-Projektor mit überwiegend p-polarisierter Strahlung vorgesehen. Der Sensorbereich ist zur Transmission von elektromagnetischer Strahlung für einen innenraumseitig angeordneten Sensor vorgesehen, welcher derart auf die innenraumseitige Oberfläche der Innenscheibe gerichtet ist, dass er die "von außen" (also über die Außenscheibe in Richtung der Innenscheibe) durch den Sensorbereich tretende Strahlung detektieren kann. Der HUD-Bereich und der Sensorbereich sind räumlich voneinander getrennt, überlappen also nicht. In einer vorteilhaften Ausgestaltung ist der Sensorbereich außerhalb eines zentralen Durchsichtsbereichs der Verbundscheibe angeordnet, insbesondere zwischen dem zentralen Durchsichtsbereich und der Oberkante, während der HUD-Bereich (zumindest teilweise) innerhalb des zentralen Durchsichtsbereich angeordnet ist. Ist die erfindungsgemäße Verbundscheibe eine Fahrzeug-Windschutzscheibe, so handelt es sich bei dem besagten Durchsichtsbereich insbesondere um ein in ECE-R43 (Regelung Nr. 43 der Wirtschaftskommission der Vereinten Nationen für Europa (UN/ECE); "Einheitliche Bedingungen für die Genehmigung der Sicherheitsverglasungswerkstoffe und ihres Einbaus in Fahrzeuge") definiertes Sichtfeld, bevorzugt:

- das Sichtfeld B, falls die Fahrzeugscheibe für ein Fahrzeug der Kategorie M1 vorgesehen ist (Fahrzeug zur Personenbeförderung mit höchstens acht Sitzplätzen außer dem Fahrersitz, beispielsweise Personenkraftwägen); das Sichtfeld B ist in Anhang 18 von ECE-R43 definiert;
- das Sichtfeld I, falls die Fahrzeugscheibe für ein Fahrzeug der Kategorie M, außer M1, vorgesehen ist (sonstige Fahrzeuge zur Personenbeförderung) oder für ein Fahrzeug der Kategorie N (Fahrzeuge zur Güterbeförderung).

Die Verbundscheibe der erfindungsgemäßen Projektionsanordnung ist mit einer elektrisch leitfähigen Beschichtung versehen. Die elektrisch leitfähige Beschichtung kann auch als Reflexionsbeschichtung bezeichnet werden, da ihre primäre Funktion die Reflexion der Strahlung des HUD-Projektors zur Erzeugung des HUD-Anzeigebildes ist. Sie ist dementsprechend erfindungsgemäß geeignet, die Strahlung des HUD-Projektors zu reflektieren. Die elektrisch leitfähige Beschichtung ist bevorzugt auf einer der Zwischenschicht zugewandten Oberflächen der beiden Scheiben, also der innenraumseitigen Oberfläche der Außenscheibe oder der außenseitigen Oberfläche der Innenscheibe, aufgebracht. Alternativ kann die elektrisch leitfähige Beschichtung auch innerhalb der thermoplastischen Zwischenschicht angeordnet sein, beispielsweise aufgebracht auf einer Trägerfolie, die zwischen zwei thermoplastischen Verbindefolien angeordnet ist. Besonders bevorzugt ist die Anordnung der elektrisch leitfähigen Beschichtung auf der außenseitigen Oberfläche der Innenscheibe, weil die Projektorstrahlung dann den geringstmöglichen Weg durch die Verbundscheibe zurücklegen muss, bis sie auf die Reflexionsbeschichtung trifft. Das ist vorteilhaft im Hinblick auf die Qualität des HUD-Bildes. Die elektrisch leitfähige Beschichtung ist transparent, was im Sinne der Erfindung bedeutet, dass sie eine mittlere Transmission im sichtbaren Spektralbereich von mindestens 70 %, bevorzugt mindestens 80 % aufweist und dadurch die Durchsicht durch die Scheibe nicht wesentlich einschränkt.

Sowohl der HUD-Bereich als auch der Sensorbereich der Verbundscheibe sind vollständig mit der elektrisch leitfähigen Beschichtung bedeckt. Im HUD-Bereich dient die Beschichtung der Reflexion der Strahlung des HUD-Projektors, im Sensorbereich der Beheizung desselben. Beheizt wird nur der Sensorbereich, während der HUD-Bereich nicht durch die Beschichtung beheizt wird, also kein Heizstrom durch den HUD-Bereich fließt. In einer besonders bevorzugten Ausgestaltung der Erfindung sind mindestens 80% der Verbundscheibenoberfläche mit der Beschichtung versehen. Insbesondere ist die Beschichtung vollflächig aufgebracht mit Ausnahme eines umlaufenden Randbereichs und optional lokaler Bereich, die als Kommunikationsfenster (Datenübertragungsfenster) die Transmission von elektromagnetischer Hochfrequenzstrahlung gewährleisten sollen. Der umlaufende unbeschichtete Randbereich weist beispielsweise eine Breite von bis zu 20 cm auf. Er verhindert den direkten Kontakt der Beschichtung zur umgebenden Atmosphäre, so dass sie im Innern der Verbundscheibe vor Korrosion und Beschädigung geschützt ist. Ein solcher großflächiger Einsatz der Beschichtung ist einerseits herstellungsbedingt bevorzugt, weil die großflächige Beschichtung leichter zu realisieren ist als die Beschichtung zweier lokal begrenzter Bereiche, und erhöht andererseits den thermischen Komfort im Innenraum aufgrund der reflektierenden Wirkung gegenüber den infraroten Anteilen der Sonnenstrahlung.

Die Lichttransmission der Verbundscheibe, gemessen unter einem Einstrahlwinkel von 0° zur Flächennormalen, beträgt in einer vorteilhaften Ausgestaltung mindestens 70%. Dann kann die Verbundscheibe als Fahrzeug-Windschutzscheibe verwendet werden. Die Lichttransmission wird mit einer Strahlungsquelle der Lichtart A gemessen und beschreibt den Anteil des "von außen" (also bei Bestrahlung der außenseitigen Oberfläche der Außenscheibe in Richtung der Innenscheibe) durch die Verbundscheibe tretenden Lichts, wobei das Licht mit einem Einstrahlwinkel von 0° zur außenseitigen Flächennormalen der außenseitigen Oberfläche der Außenscheibe auf diese gerichtet ist. Die Lichttransmission bezieht sich insbesondere auf den gesamten sichtbaren Spektralbereich von 380 nm bis 780 nm. Die besagte Lichttransmission tritt insbesondere in einem zentralen Durchsichtsbereich auf, während beispielsweise ein umlaufender Randbereich durch einen Abdeckdruck opak ausgestaltet sein kann, wie es für Windschutzscheiben und Heckscheiben von Fahrzeugen üblich ist. Die Lichttransmission wird häufig auch als Gesamttransmission bezeichnet und bezieht sich insbesondere auf das durch ECE-R 43, Anhang 3, § 9.1 festgelegte Verfahren zur Prüfung der Lichtdurchlässigkeit von Kraftfahrzeugscheiben.

Die Lichttransmission der Verbundscheibe, gemessen unter einem Einstrahlwinkel von 73,5° zur Flächennormalen, beträgt in einer vorteilhaften Ausgestaltung mindestens 50%, bevorzugt mindestens 55%. Die Lichttransmission wird mit einer Strahlungsquelle der Lichtart A gemessen und beschreibt den Anteil des "von außen" (also bei Bestrahlung der außenseitigen Oberfläche der Außenscheibe in Richtung der Innenscheibe) durch die Verbundscheibe tretenden Lichts, wobei das Licht mit einem Einstrahlwinkel von 73,5° zur außenseitigen Flächennormalen der außenseitigen Oberfläche der Außenscheibe auf diese gerichtet ist. Die Lichttransmission bezieht sich insbesondere auf den gesamten sichtbaren Spektralbereich von 380 nm bis 780 nm. Die besagte Lichttransmission tritt insbesondere im Sensorbereich auf und wird bevorzugt im geometrischen Zentrum des Sensorbereichs gemessen. Horizontal durch die Verbundscheibe beziehungsweise den Sensorbereich tretende Strahlung weist einen Einstrahlwinkel auf, der im Wesentlichen dem Einbauwinkel der Verbundscheibe (typischerweise im Fahrzeug) zur Vertikalen entspricht. Typische Einbauwinkel von Windschutzscheiben in Fahrzeugen betragen von 55° bis 75°, insbesondere von 60° bis 70°.

Der Einstrahlwinkel von 73,5° wird deshalb zur Charakterisierung herangezogen, weil er bei vergleichsweise flach eingebauten Verbundscheiben auftritt. Die Verbundscheibe der erfindungsgemäßen Projektionsanordnung weist damit auch dann gute Transmissionswerte für den Sensor auf, wenn sie als vergleichsweise flach eingebaut ist. Dadurch wir eine gute Detektionseffizienz des Sensors sichergestellt und die typischen Spezifikationen von Fahrzeugherstellern erfüllt.

Das Verhältnis der Transmission im Spektralbereich von 600 nm bis 700 nm zur Transmission im Spektralbereich von 440 nm bis 700 nm der Verbundscheibe beträgt in einer vorteilhaften Ausgestaltung größer als 0,85, besonders bevorzugt größer als 0,9. Die genannten Werte sind Integralwerte, das heißt gemittelte Werte für die entsprechenden Wellenlängenbereiche, die nicht mit der Augenempfindlichkeitskurve und einer Lichtart verrechnet werden. Das besagte Verhältnis wird im Folgenden als Transmissionsverhältnis bezeichnet. Das Transmissionsverhältnis wird gemessen mit "von außen" (also bei Bestrahlung der außenseitigen Oberfläche der Außenscheibe in Richtung der Innenscheibe) durch die Verbundscheibe tretendem Licht, wobei das Licht mit einem Einstrahlwinkel von 0° zur außenseitigen Flächennormalen der außenseitigen Oberfläche der Außenscheibe auf diese gerichtet ist. Das besagte Transmissionsverhältnis tritt insbesondere im Sensorbereich auf und wird bevorzugt im geometrischen Zentrum des Sensorbereichs gemessen. Ein hohes Transmissionsverhältnis wird von Fahrzeugherstellern gefordert, insbesondere wenn der Sensor eine Kamera ist. Durch das hohe Transmissionsverhältnis wird eine gute Funktionsfähigkeit des Sensors gewährleistet.

Das Verhältnis der Transmission von p-polarisiertem Licht zur Transmission von s-polarisiertem Licht beträgt in einer vorteilhaften Ausgestaltung mindestens 1,20, bevorzugt mindestens mindestens 1,50, ganz bevorzugt mindestens 1,60 und insbesondere 1,70. Dieses Verhältnis wir im Sinne der Erfindung als Polarisationsverhältnis bezeichnet. Das Polarisationsverhältnis wird mit einer Strahlungsquelle der Lichtart A mit "von außen" (also bei Bestrahlung der außenseitigen Oberfläche der Außenscheibe in Richtung der Innenscheibe) durch die Verbundscheibe tretendem Licht, wobei das Licht mit einem Einstrahlwinkel von 70° zur außenseitigen Flächennormalen der außenseitigen Oberfläche der Außenscheibe auf diese gerichtet ist. Das Polarisationsverhältnis bezieht sich insbesondere auf den gesamten sichtbaren Spektralbereich von 380 nm bis 780 nm. Das besagte Polarisationsverhältnis tritt insbesondere im Sensorbereich auf und wird bevorzugt im geometrischen Zentrum des Sensorbereichs gemessen. Durch ein hohes Polarisationsverhältnis kann ein störender Einfluss auf den Sensor reduziert werden, der beispielsweise durch an einer feuchten Fahrbahn reflektiertes Licht hervorgerufen wird, da solche Reflexionen hauptsächlich s-polarisiert sind. Dadurch werden eine gute Funktionsfähigkeit des Sensors sichergestellt und typische Spezifikationen von Fahrzeugherstellern erfüllt.

Der Flächenwiderstand der elektrisch leitfähigen Beschichtung beträgt in einer vorteilhaften Ausgestaltung von 2 Ω/Quadrat bis 10 Ω/Quadrat, bevorzugt von 3 Ω/Quadrat bis 5 Ω/Quadrat. Damit kann, insbesondere in Verbindung mit typischen Bordspannungen von Fahrzeugen, eine gute Heizleistung im Sensorbereich erreicht werden, so dass der Sensorbereich in angemessener Zeit von Eis oder kondensierter Feuchtigkeit befreit werden kann, um die Funktionsfähigkeit des Sensors zu gewährleisten.

Die mit der Reflexionsbeschichtung versehene Verbundscheibe weist bevorzugt im Spektralbereich von 400 nm bis 680 nm einen gemittelten Reflexionsgrad gegenüber p-polarisierter Strahlung von mindestens 10% auf, besonders bevorzugt von mindestens 15%, ganz besonders bevorzugt von mindestens 20%. Damit wird ein hinreichend intensitätsstarkes Projektionsbild erzeugt. Hierbei wird der Reflexionsgrad gemessen mit einem Einfallswinkel von 65° zur innenraumseitigen Flächennormalen, was etwa der Bestrahlung durch übliche Projektoren entspricht. Der Spektralbereich von 400 nm bis 680 nm wurde zur Charakterisierung der Reflexionseigenschaften herabgezogen, weil der optische Eindruck eines Betrachters in erster Linie durch diesen Spektralbereich geprägt wird. Außerdem deckt er die für die HUD-Darstellung relevanten Wellenlängen ab (RGB: 473 nm, 550 nm, 630 nm). Der hohe Reflexionsgrad bei einem vergleichsweise einfachen Schichtaufbau ist ein großer Vorteil der vorliegenden Erfindung. Besonders gute Ergebnisse werden erzielt, wenn die Reflexionsgrad im gesamten Spektralbereich von 400 nm bis 680 nm mindestens 10%, bevorzugt mindestens 15 %, ganz bevorzugt mindestens 20 % beträgt, so dass der Reflexionsgrad im angegeben Spektralbereich an keiner Stelle unter den angegebenen Werten liegt.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad gegenüber p-polarisierter Strahlung beziehen sich im Rahmen der vorliegenden Erfindung auf den Reflexionsgrad gemessen mit einem Einfallswinkel von 65° zur innenraumseitigen Flächennormalen. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Um eine möglichst farbneutrale Darstellung des Projektorbildes zu erreichen, sollte das Reflexionsspektrum möglichst glatt sein und keine ausgeprägten lokalen Minima und Maxima ausweisen. Im Spektralbereich von 400 nm bis 680 nm sollte die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades in einer bevorzugten Ausgestaltung höchstens 3 % betragen, besonders bevorzugt höchstens 2 %. Auch hier ist wieder der Reflexionsgrad gegenüber p-polarisierter Strahlung gemessen mit einem Einfallswinkel von 65° zur innenraumseitigen Flächennormalen heranzuziehen. Die abgegebene Differenz ist als absolute Abweichung des Reflexionsgrades (angegeben in %) zu verstehen, nicht als prozentuale Abweichung relativ zum Mittelwert. Die angegebene Glätte des Reflexionsspektrums kann mit der Reflexionsbeschichtung aufgrund ihrer elektrisch leitfähigen Schicht problemlos erreicht werden.

Als Maß für die Glätte des Reflexionsspektrums kann alternativ die Standardabweichung im Spektralbereich von 400 nm bis 680 nm herangezogen werden. Sie beträgt bevorzugt kleiner 1%, besonders bevorzugt kleiner 0,9 %, ganz besonders bevorzugt kleiner 0,8 %.

Die vorstehend genannten Charakteristika hinsichtlich der Lichttransmission unter verschiedenen Einstrahlwinkeln, dem Transmissionsverhältnis, dem Polarisationsverhältnis, dem Flächenwiderstand und dem Reflexionsverhalten gegenüber p-polarisierter Strahlung können mit der elektrisch leitfähigen Beschichtung problemlos realisiert werden, was einer ihrer großen Vorteile ist.

Der Sensorbereich ist ein transparenter Bereich der Verbundscheibe, der dafür geeignet und vorgesehen ist, von außen durch die Verbundscheibe tretende elektromagnetische Strahlung zu transmittieren, welche durch einen innenraumseitig angeordneten beziehungsweise anzuordnenden Sensor detektiert werden kann. Der Sensor ist dazu bevorzugt an der innenraumseitigen Oberfläche der Innenscheibe befestigt beziehungsweise zu befestigen.

Typischerweise ist der Sensor in einem Kunststoffgehäuse angeordnet, welches an der innenraumseitigen Oberfläche der Innenscheibe angeklebt ist beziehungsweise anzukleben ist.

Die hierbei verwendeten Sensoren sind insbesondere Infrarot (IR)-Sensoren, Sensoren für Licht im sichtbaren Spektralbereich, Ultraviolett (UV)-Sensoren, Kameras, Radar- oder Lidarsysteme. Dem Sensorbereich können auch mehrere verschiedene Sensoren zugeordnet sein. Der oder die Sensoren können für Fahrerassistenzsysteme (ADAS, *Advanced Driver Assistance Systems*) vorgesehen sein oder sogar für das autonome Fahren.

Zur Beheizung des Sensorbereichs sind erfindungsgemäß Sammelleiter beidseitig des Sensorbereichs angeordnet. Auf jeder Seite des Sensorbereichs ist dabei mindestens ein Sammelleiter angeordnet, so dass der Sensorbereich zwischen den Sammelleitern befindlich ist. Die Sammelleiter sind derart mit der elektrisch leitfähigen Beschichtung verbunden, dass zwischen ihnen ein Strompfad für einen Heizstrom geformt wird. Der Strompfad verläuft über den Sensorbereich, ist also (teilweise) innerhalb des Sensorbereichs angeordnet. Die Sammelleiter sind zum Anschluss an eine externe Spannungsquelle vorgesehen, wobei sie mit den entgegengesetzten Polen der Spannungsquelle verbunden werden, so dass eine elektrische Spannung an die Sammelleiter angelegt wird und dadurch der Heizstrom entlang des Strompfades durch die Beschichtung fließt und selbige im Sensorbereich beheizt. Die Sammelleiter sind bevorzugt seitlich zum Sensorbereich angeordnet - der mindestens eine erste Sammelleiter ist also zwischen dem Sensorbereich und der einen Seitenkante der Verbundscheibe angeordnet und der mindestens eine zweite Sammelleiter zwischen dem Sensorbereich und der anderen Seitenkante der Verbundscheibe. Die Sammeleiter erstrecken sich dann im Wesentlichen vertikal, also in der Richtung zwischen der Oberkante und der Unterkante der Verbundscheibe, und der Heizstrom fließt im Wesentlichen horizontal, also in der Richtung zwischen den Seitenkanten der Verbundscheibe. Das ist besonders vorteilhaft für die elektrische Kontaktierung der Sammelleiter, welche dann in der Nähe der Oberkante (beziehungsweise der Unterkante) erfolgen kann.

Zum elektrischen Anschluss der Sammelleiter an die Spannungsquelle sind die Sammelleiter bevorzugt mit Flachleitern (Folienleitern) verbunden, welche sich ausgehend vom jeweiligen Sammelleiter über die nächstliegende Kante (insbesondere Oberkante) der Verbundscheibe hinaus erstrecken. Diese Flachleiter können dann mit elektrischen Kabeln verbunden werden, um den Anschluss an die Spannungsquelle herzustellen. Die Folienleiter umfassen einen elektrisch leitfähigen Kern in Form einer metallischen Folie (beispielsweise Kupferfolie) und weisen typischerweise eine isolierende Ummantelung auf. Die Folienleiter können bevorzugt auf den Sammelleitern aufgelötet werden. Die Spannungsquelle ist insbesondere die Bordspannung des Fahrzeugs, wenn die Verbundscheibe eine Fahrzeugscheibe ist. Gebräuchliche Bordspannungen betragen 12 V bis 14 V, wobei in jüngster Zeit auch höhere Spannungen versendet werden, beispielsweise von 12 V bis 50 V. Es hat sich gezeigt, dass die Beschichtung mit solchen Spannungen eine ausreichende Heizwirkung erzielt, um den Sensorbereich zu beheizen. Aufgrund der nur einen Silberschicht ist die Heizwirkung aber in der Regel nicht ausreichend, um die gesamte Verbundscheibe sinnvoll zu beheizen. Daher ist der Strompfad bevorzugt selektiv dem Sensorbereich zugeordnet, während der Großteil der Verbundscheibe nicht durch die elektrisch leitfähige Beschichtung beheizt wird. Insbesondere wird der zentrale Durchsichtsbereich bevorzugt nicht durch die elektrisch leitfähige Beschichtung beheizt, im Falle einer Fahrzeug-Windschutzscheibe insbesondere das Sichtfeld B beziehungsweise I nach ECE-R43.

Der Sensorbereich weist typischerweise eine Fläche von 10 cm² bis 50 cm² auf. Die zwischen den Sammelleitern befindliche beheizbare Bereich der Verbundscheibe beziehungsweise der Beischichtung (Heizbereich) schließt typischerweise neben dem eigentlichen Sensorbereich noch daran angrenzende Bereich ein. Der Heizbereich weist bevorzugt eine Fläche von 20 cm² bis 100 cm² auf.

Die beiden Sammelleiter sind streifenartig ausgebildet und weisen bevorzugt einen Abstand voneinander von 5 cm bis 100 cm auf, besonders bevorzugt von 10 cm bis 90 cm. Der Abstand kann konstant sein, wenn die Sammelleiter parallel zueinander angeordnet sind - der Heizbereich ist dann im Wesentlichen rechteckig. Der Abstand kann auch veränderlich sein, wenn die Sammelleiter mit einem endlichen Winkel zueinander angeordnet sind - der Heizbereich ist dann im Wesentlichen trapezförmig. Es sind auch kompliziertere Formen des Heizbereichs realisierbar. Die Sammelleiter können insgesamt linear ausgebildet sein oder mehrere lineare, zueinander in einem endlichen Winkel angeordnete Bereich umfassen oder auch gebogen sein.

Die Breite der Sammelleiter (Ausdehnung längs zum Strompfad) beträgt bevorzugt von 2 mm bis 30 mm, besonders bevorzugt von 4 mm bis 20 mm und insbesondere von 10 mm bis 20 mm. Damit werden gute Ergebnisse hinsichtlich des elektrischen Widerstands der Sammelleiter erzielt. Die Länge der Sammelleiter (Ausdehnung senkrecht zum Strompfad) richtet sich nach der Größe des Sensor- beziehungsweise Heizbereichs und beträgt beispielsweise von 5 cm bis 40 cm, insbesondere von 10 cm bis 30 cm.

Der an sich transparente Sensorbereich ist typischerweise von einem opaken Bereich umgeben. Die Sammelleiter sind bevorzugt in diesem opaken Bereich angeordnet, um sie gleichsam zu verstecken. Der opake Bereich kann durch einen Abdeckdruck realisiert sein, welche durch eine aufgedruckte und eingebrannte Emaille gebildet ist, insbesondere auf der innenraumseitigen Oberfläche der Außenscheibe und/oder der Innenscheibe. Alternativ kann die Zwischenschicht opak ausgebildet sein, beispielweise durch Verwendung von opaken Folienabschnitten, oder es kann ein opakes Element in die Zwischenschicht eingelegt sein.

Die Sammelleiter können auf die mit der Beschichtung versehene Substratoberfläche (insbesondere die mit der Beschichtung versehene innenraumseitige Oberfläche der Außenscheibe oder außenseitige Oberfläche der Innenscheibe) aufgedruckt sein, entweder oberhalb oder unterhalb der Beschichtung. Dabei werden elektrisch leifähige Druckpasten verwendet, insbesondere enthaltend Silberpartikel und Glasfritten, welche typischerweise im Siebdruckverfahren aufgedruckt und eingebrannt werden. Die Schichtdicke der Sammelleiter beträgt dabei bevorzugt von 5 $\mu$m bis 40 $\mu$m, besonders bevorzugt von 8 $\mu$m bis 20 $\mu$m, ganz besonders bevorzugt von 8 $\mu$m bis 12 $\mu$m. Aufgedruckte Sammelleiter mit diesen Dicken sind technisch einfach zu realisieren und weisen eine vorteilhafte Stromtragfähigkeit auf. Der spezifische Widerstand der Sammelleiter beträgt bevorzugt von 0.8 $\mu$Ohm•cm bis 7.0 $\mu$Ohm•cm und besonders bevorzugt von 1.0 $\mu$Ohm•cm bis 2.5 $\mu$Ohm•cm.

Alternativ können die Sammelleiter als Streifen einer elektrisch leitfähigen Folie ausgebildet sein, insbesondere Metallfolie, beispielsweise Kupferfolie, die optional verzinnt sein kann. Die Sammelleiter werden auf die Beschichtung aufgelegt und optional mit dieser verlötet oder verklebt. Die Dicke der Folie beträgt bevorzugt von 10 $\mu$m bis 500 $\mu$m, besonders bevorzugt von 30 $\mu$m bis 300 $\mu$m. Diese Lösung ist insbesondere dann vorteilhaft, wenn die Beschichtung auf einer Trägerfolie innerhalb der Zwischenschicht angeordnet ist.

Die Sammelleiter können einfach mit dem den Sensorbereich beinhaltenden Bereich der elektrisch leitfähigen Beschichtung verbunden sein, wodurch sich zwischen ihnen der Heizbereich ausbildet, wobei die Beschichtung im Heizbereich nicht von der umliegenden Beschichtung getrennt ist. In einer weiteren Ausgestaltung der Erfindung ist der Heizbereich samt den Sammelleitern durch einen linienartigen unbeschichteten Bereich (Isolierungslinie) von der umliegenden Beschichtung elektrisch isoliert und/oder stofflich getrennt. Die Isolierungslinie wird bevorzugt mittels lasergestützten Entschichtungsmethoden in die Beschichtung eingebracht. Die Isolierungslinie kann eine geschlossene Form ausbildet, beispielsweise ein Rechteck oder ein Trapez, und den Heizbereich vollständig umranden. Die Sammelleiter sind dabei bevorzugt vollständig innerhalb des durch die Isolierungslinie begrenzten Bereichs angeordnet. Alternativ können sich der Angang und das Ende der Isolierungslinie bis zum Rand der Beschichtung erstrecken, wodurch ein an den besagten Rand angrenzender Heizbereich abgetrennt wird. Der abgetrennte Bereich beinhaltet bevorzugt vollständig die Sammelleiter und den Sensorbereich. Das hat den Vorteil, dass sich die Sammelleiter bis zum Rand der Beschichtung (oder sogar dem Rand der Verbundscheibe) erstrecken können, wo sie besonders vorteilhaft elektrisch kontaktiert werden können. Die Isolierungslinie weist typischerweise zwei an den Rand der Beschichtung grenzende Endanschnitte auf, welche im Wesentlichen parallel zu den Sammelleitern verlaufen und einen sich zwischen diesen erstreckenden Mittelabschnitt. Ein zwischen den Sammelleitern und zwischen dem Sensorbereich und dem Rand der Beschichtung befindlicher Bereich kann durch eine weitere Isolierungslinie vom Heizbereich abgetrennt werden, um diesen vorteilhaft zu verkleinern. Auch diese zweite Isolierungslinie weist bevorzugt zwei an den Rand der Beschichtung grenzende Endanschnitte auf, welche im Wesentlichen parallel zu den Sammelleitern verlaufen und einen sich zwischen diesen erstreckenden Mittelabschnitt.

Es ist auch möglich, dass innerhalb des Heizbereichs mindestens eine Isolierungslinie angeordnet ist, welche von einem Sammelleiter zum gegenüberliegenden Sammelleiter, insbesondere im Wesentlichen parallel zum Strompfad, verläuft. Dadurch kann der Heizstrom gezielt geleitet werden, was insbesondere dann vorteilhaft sein kann, wenn die Sammelleiter nicht parallel zueinander angeordnet sind.

Die elektrisch leitfähige Beschichtung (Reflexionsbeschichtung) weist genau eine elektrisch leitfähige Schicht auf Basis von Silber auf. Unterhalb der elektrisch leitfähigen Schicht ist eine untere dielektrische Schicht oder Schichtenfolge angeordnet. Ebenso ist oberhalb der elektrisch leitfähigen Schicht eine obere dielektrische Schicht oder Schichtenfolge angeordnet. Die obere und die untere dielektrische Schicht oder Schichtenfolge weisen jeweils einen Brechungsindex auf, der mindestens 1,9 beträgt.

Brechungsindizes sind im Rahmen der vorliegenden Erfindung grundsätzlich bezogen auf eine Wellenlänge von 550 nm angegeben. Die optische Dicke ist das Produkt aus der geometrischen Dicke und dem Brechungsindex (bei 550 nm). Die optische Dicke einer Schichtenfolge berechnet sich als Summe der optischen Dicken der Einzelschichten.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht. Die untere dielektrische Schicht(enfolge) ist demnach zwischen der elektrisch leitfähigen Schicht und der Substratoberfläche angeordnet. Die obere dielektrische Schicht(enfolge) ist auf der von der Substratoberfläche abgewandten Seite der elektrisch leitfähigen Schicht angeordnet, so dass die elektrisch leitfähige Schicht und die darunter befindliche untere dielektrische Schicht(enfolge) zwischen der Substratoberfläche und der oberen dielektrischen Schicht(enfolge) angeordnet ist. Die Substratoberfläche ist die innenraumseitige Oberfläche der Außenscheibe, die außenseitige Oberfläche der Innenscheibe oder die Oberfläche einer Folie der Zwischenschicht.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen.

Erfindungsgemäß beträgt das Verhältnis der optischen Dicke der oberen dielektrischen Schicht oder Schichtenfolge zur optischen Dicke der unteren dielektrischen Schicht oder Schichtenfolge mindestens 1,7. Es hat sich überraschend gezeigt, dass diese Asymmetrie der optischen Dicken zu einem deutlich glatteren Reflexionsspektrum gegenüber p-polarisierter Strahlung führt, so dass über den gesamten relevanten Spektralbereich (400 nm bis 680 nm) ein relativ konstanter Reflexionsgrad vorliegt. Dadurch wird eine farbneutrale Darstellung der HUD-Projektion gewährleistet und ein farbneutraler Gesamteindruck der Scheibe. Außerdem ist das erfindungsgemäße Verhältnis der optischen Dicken vorteilhaft im Hinblick auf ein hohes Transmissionsverhältnis, ein hohes Polarisationsverhältnis und eine hohe Lichttransmission unter hohen Einstrahlwinkeln, insbesondere bei einem Einstrahlwinkel von 73,5°.

Das erfindungsgemäße Verhältnis der optischen Dicken berechnet sich als Quotient aus der optischen Dicke der oberen dielektrischen Schicht oder Schichtenfolge (Divident) geteilt durch die optische Dicke der unteren dielektrischen Schicht oder Schichtenfolge (Divisor). Ist unterhalb und/oder oberhalb der elektrisch leitfähigen Schicht mehr als eine dielektrische Schicht vorhanden, so liegt eine obere beziehungsweise untere dielektrische Schichtenfolge vor, welche sämtliche dielektrischen Schichten oberhalb beziehungsweise unterhalb der elektrisch leitfähigen Schicht umfasst. Bei der Berechnung der optischen Dicke der oberen und unteren dielektrischen Schichtenfolge sind also sämtliche dielektrische Schichten heranzuziehen.

In einer bevorzugten Ausgestaltung beträgt das Verhältnis der optischen Dicke der oberen dielektrischen Schicht oder Schichtenfolge zur optischen Dicke der unteren dielektrischen Schicht oder Schichtenfolge mindestens 1,8, besonders bevorzugt mindestens 1,9. Damit werden besonders gute Ergebnisse erzielt.

Die Reflexionsbeschichtung ist ein Dünnschichtstapel, also eine Schichtenfolge dünner Einzelschichten. Dieser Dünnschichtstapel enthält genau eine elektrisch leitfähige Schicht auf Basis von Silber. Die elektrisch leitfähige Schicht auf Basis von Silber verleiht der Reflexionsbeschichtung die grundlegenden reflektierenden Eigenschaften und außerdem eine IR-reflektierende Wirkung und eine elektrische Leitfähigkeit. Die elektrisch leitfähige Schicht auf Basis von Silber kann auch vereinfacht als Silberschicht bezeichnet werden. Die Reflexionsbeschichtung enthält genau eine Silberschicht, also nicht mehr als eine Silberschicht, und auch oberhalb oder unterhalb der Reflexionsbeschichtung sind keine weiteren Silberschichten angeordnet. Es ist ein besonderer Vorteil der vorliegenden Erfindung, dass mit einer Silberschicht die gewünschten Reflexionseigenschaften erreicht werden können, ohne dass die Transmission zu stark herabgesetzt würde, wie es bei der Verwendung mehrerer leitfähiger Schichten der Fall wäre. Es können aber weitere metallische Schichten vorliegen, die nicht wesentlich zur elektrischen Leitfähigkeit der Reflexionsbeschichtung beitragen, sondern einen anderen Zweck erfüllen. Dies gilt insbesondere für metallische Blockerschichten mit geometrischen Dicken von weniger als 1 nm, die bevorzugt zwischen der Silberschicht und den dielektrischen Schichtenfolgen angeordnet sind.

Die elektrisch leitfähige Schicht ist auf Basis von Silber ausgebildet. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Paladium, Gold, Kupfer oder Aluminium. Die geometrische Schichtdicke der Silberschicht beträgt bevorzugt höchstens 15 nm, besonders bevorzugt höchstens 14 nm, ganz besonders bevorzugt höchstens 12 nm. Dadurch kann eine vorteilhafte Reflektivität im IR-Bereich, ohne die Transmission zu stark herabzusetzen. Die geometrische Schichtdicke der Silberschicht beträgt bevorzugt mindestens 5 nm, besonders bevorzugt mindestens 8 nm. Dünnere Silberschichten können zu einer Entnetzung des Schichtaufbaus führen. Besonders bevorzugt beträgt die geometrische Schichtdicke der Silberschicht von 8 nm bis 14 nm. Es hat sich gezeigt, dass dünnere Silberschichten vorteilhaft sind für die Funktionsfähigkeit des Sensors, insbesondere weil eine höhere Transmission unter hohen Einstrahlwinkeln (insbesondere 73,5°) erreicht wird. Die geometrische Schichtdicke der Silberschicht beträgt daher ganz besonders bevorzugt von 10 nm bis 12 nm oder sogar nur von 10 nm bis 11 nm.

In einer vorteilhaften Ausgestaltung umfasst die Reflexionsbeschichtung keine dielektrischen Schichten, deren Brechungsindex weniger als 1,9 beträgt. Alle dielektrischen Schichten der Reflexionsbeschichtung weisen also einen Brechungsindex von mindestens 1,9 auf. Es ist ein besonderer Vorteil der vorliegenden Erfindung, dass die gewünschten Reflexionseigenschaften allein mit relativ hochbrechenden dielektrischen Schichten erreicht werden können. Da für niedrigbrechende Schichten mit einem Brechungsindex von kleiner als 1,9 insbesondere Siliziumoxid-Schichten in Frage kommen, die geringe Abscheidungsraten bei der magnetfeldunterstützten Kathodenabscheidung aufweisen, lässt sich die Reflexionsbeschichtung so schnell und kostengünstig herstellen.

Die Reflexionsbeschichtung enthält oberhalb und unterhalb der Silberschicht unabhängig voneinander jeweils eine dielektrische Schicht oder eine dielektrische Schichtenfolge mit einem Brechungsindex von mindestens 1,9. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor. Durch die Dotierungen können an sich dielektrische Materialien mit einer gewissen elektrischen Leitfähigkeit versehen werden. Der Fachmann wird sie hinsichtlich Ihrer Funktion dennoch als dielektrische Schichten identifizieren, wie es im Bereich der dünnen Schichten üblich ist. Das Material der dielektrischen Schichten weist bevorzugt eine elektrische Leitfähigkeit (Kehrwert des spezifischen Widerstands) von kleiner $10^{-4}$ S/m auf. Das Material der elektrisch leitfähigen Schicht weist bevorzugt eine elektrische Leitfähigkeit von größer $10^4$ S/m auf.

Die optische Dicke der oberen dielektrischen Schicht oder Schichtenfolge beträgt bevorzugt von 100 nm bis 200 nm, besonders bevorzugt von 130 nm bis 170 nm. Die optische Dicke der unteren dielektrischen Schicht oder Schichtenfolge beträgt bevorzugt von 50 nm bis 100 nm, besonders bevorzugt von 60 nm bis 90 nm. Damit werden gute Ergebnisse erzielt.

In einer vorteilhaften Ausgestaltung ist oberhalb und unterhalb der Silberschicht jeweils eine dielektrische Schicht angeordnet, die als Entspiegelungsschicht bezeichnet werden kann und bevorzugt auf Basis eines Oxids, beispielsweise Zinnoxid, und/oder eines Nitrids, beispielsweise Siliziumnitrid, besonders bevorzugt auf Basis von Siliziumnitrid. Siliziumnitrid hat sich aufgrund seiner optischen Eigenschaften, seiner einfachen Verfügbarkeit sowie seiner hohen mechanischen und chemischen Stabilität bewährt. Das Silizium ist bevorzugt dotiert, beispielsweise mit Aluminium oder Bor. Im Falle von dielektrischen Schichtenfolgen ist die Schicht auf Basis von Siliziumnitrid bevorzugt die oberste Schicht der oberen Schichtenfolge beziehungsweise die unterste Schicht der unteren Schichtenfolge. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

Neben der Entspiegelungsschicht können optional weitere dielektrische Schichten mit Brechungsindex von mindestens 1,9 vorhanden sein. So können die obere und untere Schichtenfolge unabhängig voneinander eine Anpassungsschicht enthalten, welche die Reflektivität der Silberschicht verbessern. Die Anpassungsschichten sind bevorzugt auf Basis von Zinkoxid ausgebildet, besonders bevorzugt Zinkoxid $ZnO_{1-\delta}$ mit $0 \leq \delta \leq 0,01$. Die Anpassungsschichten enthalten weiter bevorzugt Dotierungen. Die Anpassungsschichten können beispielsweise Aluminium-dotiertes Zinkoxid (ZnO:Al) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Anpassungsschichten sind bevorzugt angeordnet zwischen der Silberschicht und der Entspiegelungsschicht. Die geometrische Dicke der Anpassungsschicht beträgt bevorzugt von 5 nm bis 30 nm, besonders bevorzugt von 8 nm bis 12 nm.

Es können auch brechungsindexsteigernde Schichten vorhanden sein, die einen höheren Brechungsindex aufweisen als die Entspiegelungsschicht, ebenfalls unabhängig voneinander in der oberen und der unteren Schichtenfolge. Dadurch können die optischen Eigenschaften weiter verbessert und feineingestellt werden, insbesondere die Reflexionseigenschaften. Die brechungsindexsteigernden Schichten enthalten bevorzugt ein Silizium-Metall-Mischnitrid wie Silizium-Zirkonium-Mischnitrid, Silizium-Aluminium-Mischnitrid, Silizium-Titan-Mischnitrid oder Silizium-Hafnium-Mischnitrid, besonders bevorzugt Silizium-Zirkonium-Mischnitrid. Der Anteil an Zirkonium beträgt dabei bevorzugt zwischen 15 und 45 Gew.-%, besonders bevorzugt zwischen 15 und 30 Gew.-%. Als alternative Materialien kommen beispielsweise $WO_3$, $Nb_2O_5$, $Bi_2O_3$, $TiO_2$, $Zr_3N_4$ und/oder AIN in Betracht. Die brechungsindexsteigernden Schichten sind bevorzugt zwischen der Entspiegelungsschicht und der Silberschichtung angeordnet beziehungsweise zwischen der Anpassungsschicht (soweit vorhanden) und der Entspiegelungsschicht. Die geometrische Dicke der brechungsindexsteigernden Schicht beträgt bevorzugt von 5 nm bis 30 nm, besonders bevorzugt von 5 nm bis 15 nm.

In einer Ausgestaltung der Erfindung ist unterhalb der elektrisch leitfähigen Schicht genau eine untere dielektrische Schicht (Entspiegelungsschicht) mit einem Brechungsindex von mindestens 1,9 angeordnet, bevorzugt auf Basis von Siliziumnitrid. Ebenso ist oberhalb der elektrisch leitfähigen Schicht genau eine obere dielektrische Schicht (Entspiegelungsschicht) mit einem Brechungsindex von mindestens 1,9 angeordnet, bevorzugt auf Basis von Siliziumnitrid. Es ergibt sich die Schichtenfolge ausgehend vom Substrat: untere Entspiegelungsschicht - Silberschicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

In einer weiteren Ausgestaltung der Erfindung ist unterhalb der elektrisch leitfähigen Schicht eine erste untere dielektrische Schicht (Entspiegelungsschicht) und eine zweite untere dielektrische Schicht (Anpassungsschicht) angeordnet. Ebenso ist oberhalb der elektrisch leitfähigen Schicht eine erste obere dielektrische Schicht (Entspiegelungsschicht) und eine zweite obere dielektrische Schicht (Anpassungsschicht) angeordnet. Die Entspiegelungs- und Anpassungsschichten weisen einen Brechungsindex von mindestens 1,9 auf. Die Entspiegelungsschichten sind bevorzugt auf Basis von Siliziumnitrid ausgebildet, die Anpassungsschichten auf Basis von Zinkoxid. Die Anpassungsschichten sind bevorzugt zwischen der jeweiligen Entspiegelungsschicht und der Silberschicht angeordnet: Es ergibt sich die Schichtenfolge ausgehend vom Substrat: untere Entspiegelungsschicht - untere Anpassungsschicht - Silberschicht - obere Anpassungsschicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm.

In einer weiteren Ausgestaltung der Erfindung ist unterhalb der elektrisch leitfähigen Schicht eine erste untere dielektrische Schicht (Entspiegelungsschicht), eine zweite untere dielektrische Schicht (Anpassungsschicht) und eine dritte untere dielektrische Schicht (brechungsindexsteigernde Schicht) angeordnet. Ebenso ist oberhalb der elektrisch leitfähigen Schicht eine erste obere dielektrische Schicht (Entspiegelungsschicht), eine zweite obere dielektrische Schicht (Anpassungsschicht) und eine dritte obere dielektrische Schicht (brechungsindexsteigernde Schicht) angeordnet. Die Entspiegelungs- und Anpassungsschichten sowie die brechungsindexsteigernden Schichten weisen einen Brechungsindex von mindestens 1,9 auf. Die brechungsindexsteigernden Schichten weisen einen höheren Brechungsindex auf als die Entspiegelungsschichten, bevorzugt mindestens 2,1. Die Entspiegelungsschichten sind bevorzugt auf Basis von Siliziumnitrid ausgebildet, die Anpassungsschichten auf Basis von Zinkoxid, die brechungsindexsteigernden Schichten auf Basis eines Silizium-Metall-Mischnitrids, wie Silizium-Zirkonium-Mischnitrid oder Silizium-Hafnium-Mischnitrid. Die Anpassungsschichten weisen bevorzugt den geringsten Abstand zur Silberschicht auf, während die brechungsindexsteigernden Schichten zwischen den Anpassungsschichten und den Entspiegelungsschichten angeordnet sind. Es ergibt sich die Schichtenfolge ausgehend vom Substrat: untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm. Die geometrische Dicke der brechungsindexsteigernden Schichten beträgt bevorzugt von 5 nm bis 30 nm, besonders bevorzugt von 5 nm bis 15 nm.

Da die obere und die untere dielektrische Schichtenfolge unabhängig voneinander ausgebildet werden können, sind auch Kombinationen der vorstehend beschriebenen Ausgestaltungen möglich, wobei die obere dielektrische Schicht/Schichtenfolge gemäß einer Ausgestaltung ausgebildet ist und die untere dielektrische Schicht/Schichtenfolge gemäß einer anderen. Es ergeben sich die folgenden bevorzugten Schichtenfolgen (jeweils ausgehend vom Substrat, also derjenigen Oberfläche, auf die die Reflexionsbeschichtung abgeschieden ist:

- untere Entspiegelungsschicht - Silberschicht - obere Entspiegelungsschicht
- untere Entspiegelungsschicht - Silberschicht - obere Anpassungsschicht - obere Entspiegelungsschicht
- untere Entspiegelungsschicht - Silberschicht - obere Anpassungsschicht - obere brechungsindexsteigernde Schicht - obere Entspiegelungsschicht
- untere Entspiegelungsschicht - untere Anpassungsschicht - Silberschicht - obere Entspiegelungsschicht
- untere Entspiegelungsschicht - untere Anpassungsschicht - Silberschicht - obere Anpassungsschicht - obere Entspiegelungsschicht
- untere Entspiegelungsschicht - untere Anpassungsschicht - Silberschicht - obere Anpassungsschicht - obere brechungsindexsteigernde Schicht - obere Entspiegelungsschicht
- untere Entspiegelungsschicht - untere brechungsindexsteigernde Schicht - untere Anpassungsschicht - Silberschicht - obere Entspiegelungsschicht

- untere Entspiegelungsschicht - untere brechungsindexsteigernde Schicht - untere Anpassungsschicht - Silberschicht - obere Anpassungsschicht - obere Entspiegelungsschicht

- untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht

In einer vorteilhaften Ausgestaltung umfasst die Reflexionsbeschichtung mindestens eine metallische Blockerschicht. Die Blockerschicht kann unterhalb und/oder oberhalb der Silberschicht angeordnet sein und steht bevorzugt mit der Silberschicht in direktem Kontakt. Die Blockerschicht liegt dann zwischen Silberschicht und dielektrischer Schicht/-Schichtenfolge. Die Blockerschicht dient dem Oxidationsschutz der Silberschicht insbesondere bei Temperaturbehandlungen der beschichteten Scheibe, wie sie typischerweise im Rahmen von Biegeprozessen vorkommen. Die Blockerschicht weist bevorzugt eine geometrische Dicke von weniger als 1 nm auf, beispielsweise 0,1 nm bis 0,5 nm. Die Blockerschicht ist bevorzugt auf Basis von Titan oder einer Nickel-Chrom-Legierung ausgebildet. Besonders effektiv ist die Blockerschicht direkt oberhalb der Silberschicht, weswegen in einer bevorzugten Ausgestaltung die Reflexionsbeschichtung eine Blockerschicht oberhalb der Silberschicht und keine Blockerschicht unterhalb der Silberschicht aufweist. Die Silberschicht steht dann mit der unteren dielektrischen Schicht(enfolge) in direktem Kontakt und mit der oberen dielektrischen Schicht(enfolge) in indirektem Kontakt über die Blockerschicht.

Die Blockerschicht ändert die optischen Eigenschaften der Reflexionsbeschichtung nur unwesentlich und ist bevorzugt bei allen vorstehend beschriebenen Ausgestaltungen vorhanden. Besonders bevorzugt ist die Blockerschicht direkt oberhalb der Silberschicht angeordnet, also zwischen Silberschicht und oberer dielektrischer Schicht(enfolge), wo sie besonders effektiv ist. Es kann jeweils optional eine zusätzliche Blockerschicht direkt unterhalb der Silberschicht angeordnet sein, also zwischen Silberschicht und unterer dielektrischer Schicht(enfolge).

Da die Reflexion der Projektorstrahlung im Wesentlichen an der Reflexionsbeschichtung erfolgt und nicht an den externen Scheibenoberflächen, ist es nicht nötig, die externen Scheibenoberflächen in einem Winkel zueinander anzuordnen, um Geisterbilder zu vermeiden. Die externen Oberflächen der Verbundscheibe sind daher bevorzugt im Wesentlichen parallel zueinander angeordnet. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Verbundscheibe, ebenso wie die Innenscheibe und die Außenscheibe. Eine keilartige Zwischenschicht würde dagegen im vertikalen Verlauf zwischen Unterkante und Oberkante der Verbundscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Verbundscheibe günstiger gestaltet.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

Die Außenscheibe, die Innenscheibe und die thermoplastische Zwischenschicht können klar und farblos, aber auch getönt oder gefärbt sein. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

In einer vorteilhaften Ausgestaltung sind die Außenscheibe und die Innenscheibe aus klarem Glas (Klarglas) gefertigt, als nicht getönt oder gefärbt. Dadurch wird eine hohe Lichttransmission erreicht, was sich insbesondere vorteilhaft auf die Funktionsfähigkeit des Sensors auswirkt. Unter einem Klarglas wird im Sinne der Erfindung ein Glas verstanden, dass bei einer Dicke von 4 mm eine Gesamttransmission (Lichttransmission) von mindestens 85% aufweist, bevorzugt mindestens 90%. Auch die Zwischenschicht ist dabei bevorzugt klar, also nicht getönt oder gefärbt.

Die Windschutzscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Windschutzscheibe kann aber auch plan sein, beispielsweise wenn es als Scheibe für Busse, Züge oder Traktoren vorgesehen ist.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus einer thermoplastischen Folie ausgebildet. Die Folie kann neben dem Polymer, auf dessen Basis sie ausgebildet ist, weitere fachübliche Bestandteile aufweisen, insbesondere Weichmacher, UV-Blocker, IR-Blocker oder Stabilisatoren. Die Dicke der Zwischenschicht beträgt bevorzugt von 0,2 mm bis 2 mm, besonders bevorzugt von 0,3 mm bis 1 mm.

Die Verbundscheibe weist bevorzugt keine weiteren Dünnschichtbeschichtungen außer der Reflexionsbeschichtung auf, insbesondere keine solchen Beschichtungen, welche die Intensität der an der Reflexionsbeschichtung reflektierten Projektorstrahlung verringern.

Die Verbundscheibe wird kann hergestellt werden durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die Reflexionsbeschichtung wird bevorzugt durch physikalische Gasphasenabscheidung (PVD) auf eine Scheibenoberfläche aufgebracht, besonders bevorzugt durch Kathodenzerstäubung ("Sputtern"), ganz besonders bevorzugt durch magnetfeldunterstütze Kathodenzerstäubung ("Magnetronsputtern"). Die Beschichtung wird bevorzugt vor der Lamination aufgebracht. Statt die Reflexionsbeschichtung auf eine Scheibenoberfläche aufzubringen, kann sie grundsätzlich auch auf einer Trägerfolie bereitgestellt werden, die in der Zwischenschicht angeordnet wird.

Soll die Verbundscheibe gebogen sein, so werden die Außenscheibe und die Innenscheibe bevorzugt vor der Lamination und bevorzugt nach etwaigen Beschichtungsprozessen einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Diese Temperaturbehandlung erhöht auch die Transparenz und verringert den Flächenwiderstand der Reflexionsbeschichtung.

Die Erfindung umfasst eine Projektionsanordnung für ein Head-Up-Display (HUD). Die erfindungsgemäße Projektionsanordnung umfasst mindestens

- eine Verbundscheibe,
- einen an der innenraumseitigen Oberfläche der Innenscheibe befestigten, dem Sensorbereich zugeordneten, das heißt auf den Sensorbereich gerichteten Sensor und
- einen Projektor (HUD-Projektor), der auf den HUD-Bereich gerichtet ist und dessen Strahlung überwiegend p-polarisiert ist.

Wie bei HUDs üblich bestrahlt der Projektor einen Bereich (den HUD-Bereich) der Verbundscheibe, wo die Strahlung in Richtung des Betrachters (Fahrers) reflektiert wird, wodurch ein virtuelles Bild erzeugt wird, welches der Betrachter von ihm aus gesehen hinter der Verbundscheibe wahrnimmt. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Der Projektor ist auf den HUD-Bereich der Verbundscheibe gerichtet. Er bestrahlt den HUD-Bereich mit Strahlung im sichtbaren Bereich des elektromagnetischen Spektrums zur Erzeugung der HUD-Projektion, insbesondere im Spektralbereich von 450 nm bis 650 nm, beispielsweise mit den Wellenlängen 473 nm, 550 nm und 630 nm (RGB).

Die auf die Verbundscheibe gerichtete Projektorstrahlung wird hauptsächlich an der Reflexionsbeschichtung (das heißt der erfindungsgemäß elektrisch leitfähigen Beschichtung) reflektiert, die intensitätsstärkste Reflexion findet also an der Reflexionsbeschichtung statt. Das heißt die Intensität der an der Reflexionsbeschichtung reflektierten Projektorstrahlung ist höher als die Intensität der an jeder anderen Grenzfläche reflektierten Strahlung, insbesondere höher als die Intensitäten der an der innenraumseitigen Oberfläche der Innenscheibe und der außenseitigen Oberfläche der Außenscheibe reflektierten Projektorstrahlung.

Der Projektor ist innenraumseitig der Verbundscheibe angeordnet und bestrahlt die Verbundscheibe über die innenraumseitige Oberfläche der Innenscheibe. Die Strahlung des Projektors ist erfindungsgemäß überwiegend p-polarisiert, weißt also einen p-polarisierten Strahlungsanteil von größer als 50% auf. Je höher der Anteil der p-polarisierten Strahlung an der Gesamtstrahlung des Projektors ist, desto intensitätsstärker ist das gewünschte Projektionsbild und desto intensitätsschwächer sind unerwünschte Reflexionen an den Oberflächen der Verbundscheibe. Der p-polarisierte Strahlungsanteil des Projektors beträgt bevorzugt mindestens 70%, besonders bevorzugt mindestens 80% und insbesondere mindestens 90%. In einer besonders vorteilhaften Ausgestaltung ist die Strahlung des Projektors im Wesentlichen rein p-polarisiert ist - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Verbundscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Verbundscheibe im geometrischen Zentrum des bestrahlten Bereichs aufgespannt.

Die Polarisation, also insbesondere der Anteil an p- und s-polarisierter Strahlung, wird an einem Punkt des HUD-Bereichs bestimmt, bevorzugt im geometrischen Zentrum des HUD-Bereichs. Ist die Verbundscheibe gekrümmt, was insbesondere bei Fahrzeugscheiben üblicherweise der Fall ist, so hat dies Auswirkungen auf die Einfallsebene der Projektorstrahlung. Daher können in den übrigen Bereichen leicht davon abweichende Polarisationsanteile auftreten, was aus physikalischen Gründen unvermeidlich ist.

Die Strahlung des Projektors trifft bevorzugt mit einem Einfallswinkel von 45° bis 70°, insbesondere von 60° bis 70° auf die Verbundscheibe. In einer vorteilhaften Ausgestaltung weicht der Einfallswinkel um höchstens 10° vom Brewsterwinkel ab. Die p-polarisierte Strahlung wird dann nur unwesentlich an den Oberflächen der Verbundscheibe reflektiert, so dass kein Geisterbild erzeugt wird. Der Einfallswinkel ist der Winkel zwischen dem Einfallsvektor der Projektorstrahlung und der innenraumseitigen Flächennormale (also die Flächennormale auf die innenraumseitige externe Oberfläche der Verbundscheibe) im geometrischen Zentrum des HUD-Bereichs. Der Brewsterwinkel für einen Luft-Glas-Übergang im Falle von Kalk-Natron-Glas, das für Fensterscheiben allgemein üblich ist, beträgt 56,5°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Offenbart wird außerdem die Verwendung einer erfindungsgemäßen Projektionsanordnung als HUD in einem Fahrzeug, bevorzugt einem Kraftfahrzeug, insbesondere einem Personenkraftwagen oder Lastkraftwagen. Der Verbundscheibe ist dabei bevorzugt die Windschutzscheibe des Fahrzeugs.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:

Fig. 1     eine Draufsicht auf eine Verbundscheibe der erfindungsgemäßen Projektionsanordnung
Fig. 2     einen Querschnitt durch die Verbundscheibe aus Figur 1,
Fig. 3     einen ersten Querschnitt durch die Verbundscheibe aus Figur 1 als Teil einer erfindungsgemäßen Projektionsanordnung,
Fig. 4     einen zweiten Querschnitt durch die Verbundscheibe aus Figur 1 als Teil einer erfindungsgemäßen Projektionsanordnung,
Fig. 5     eine schematische Seitenansicht einer erfindungsgemäßen Projektionsanordnung,
Fig. 6     einen Querschnitt durch eine Ausgestaltung der Reflexionsbeschichtung auf einer Innenscheibe,
Fig. 7     Reflexionsspektren von Verbundscheiben gegenüber p-polarisierter Strahlung gemäß den Beispielen 1 und 2 und dem Vergleichsbeispiel 1,
Fig. 8     Reflexionsspektren von Verbundscheiben gegenüber p-polarisierter Strahlung gemäß dem Beispiel 3 und dem Vergleichsbeispiel 2 und
Fig. 9     Reflexionsspektren von Verbundscheiben gegenüber p-polarisierter Strahlung gemäß den Beispielen 4 und 5 und den Vergleichsbeispielen 3 und 4.
Fig. 10    Reflexionsspektren von Verbundscheiben gegenüber p-polarisierter Strahlung gemäß dem Beispiel 6 und dem Vergleichsbeispiel 5,
Fig. 11    Draufsichten auf den beheizbaren Sensorbereich von vier Ausgestaltungen der Verbundscheibe der erfindungsgemäßen Projektionsanordnung.

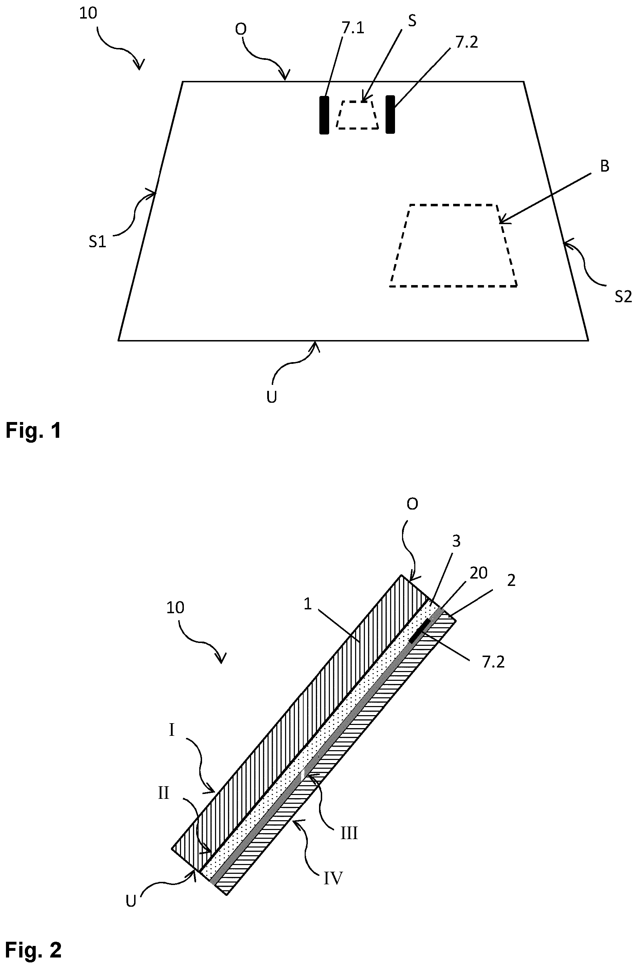

Figur 1 und Figur 2 zeigen je ein Detail einer Verbundscheibe 10 der erfindungsgemäßen Projektionsanordnung. Die Verbundscheibe 10 ist die Windschutzscheibe eines Personenkraftwagens. Die Verbundscheibe 10 ist aufgebaut aus einer Außenscheibe 1 und einer Innenscheibe 2, die über eine thermoplastische Zwischenschicht 3 miteinander verbunden sind. Ihre Unterkante U ist nach unten in Richtung des Motors des Personenkraftwagens angeordnet, ihre Oberkante O nach oben in Richtung des Dachs. Zwischen der Oberkante O und der Unterkante U verlaufen zwei Seitenkanten S1, S2.

Die Außenscheibe 1 ist in Einbaulage der äußeren Umgebung zugewandt, die Innenscheibe 2 dem Fahrzeuginnenraum. Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die Außenscheibe 1 und die Innenscheibe 2 bestehen beispielsweise aus klarem Kalk-Natron-Glas. Die Außenscheibe 1 weist beispielsweise eine Dicke von 2,1 mm auf, die Innenscheibe 2 eine Dicke von 1,6 mm oder 2,1 mm. Die Zwischenschicht 3 ist beispielsweise aus einer PVB-Folie ausgebildet mit einer Dicke von 0,76 mm. Die PVB-Folie weist eine im Wesentlichen konstante Dicke auf, abgesehen von einer etwaigen fachüblichen Oberflächenrauigkeit - sie ist nicht als sogenannte Keilfolie ausgebildet.

Die Verbundscheibe 10 weist einen HUD-Bereich B auf, der zumindest teilweise im zentralen Sichtbereich (Sichtfeld B nach ECE-R43) der Verbundscheibe 10 angeordnet ist. Der HUD-Bereich B ist dafür vorgesehen, von einem HUD-Projektor bestrahlt zu werden, um ein HUD-Bild zu erzeugen, welche von einem Betrachter (Fahrzeugfahrer) als virtuelle Bilder auf der von ihm abgewandten Seite der Verbundscheibe 10 wahrgenommen werden.

Die Verbundscheibe 10 weist außerdem einen Sensorbereich B auf. Der Sensorbereich B ist außerhalb des zentralen Sichtbereichs (Sichtfeld B nach ECE-R43) angeordnet, nämlich zwischen diesem zentralen Sichtbereich und der Oberkante O. Die Verbundscheibe 10 ist dafür vorgesehen, mit einem Sensor ausgestattet zu werden, welcher innenraumseitig zum Sensorbereich S angeordnet wird und diesem derart zugeordnet ist, dass durch den Sensorbereich S tretende elektromagnetische Strahlung durch den Sensor detektiert werden kann.

Die außenseitige Oberfläche III der Innenscheibe 2 ist mit einer erfindungsgemäß elektrisch leitfähigen Beschichtung 20 versehen. Die elektrisch leitfähige Beschichtung 20 dient einerseits als Reflexionsfläche für die Strahlung des HUD-Projektors, welche p-polarisiert ist, um Reflexionen an den externen, von der Zwischenschicht abgewandten Oberflächen I, IV zu vermeiden. Die elektrisch leitfähige Beschichtung 20 kann daher auch als Reflexionsbeschichtung bezeichnet werden. Die elektrisch leitfähige Beschichtung 20 ist mit typischen Sensoren für Personenkraftwägen kompatibel, so dass sie im Sensorbereich S nicht entfernt werden muss, sondern diesen ebenfalls bedeckt. Dort ist sie andererseits dafür vorgesehen, den Sensorbereich S zu beheizen. Dazu ist die elektrisch leitfähige Beschichtung 20 beidseitig des Sensorbereichs S mit zwei Sammelleitern 7.1, 7.2 elektrisch leitfähig verbunden. Die Sammelleiter 7.1, 7.2 sind seitlich zum Sensorbereich S angeordnet, wobei der erste Sammelleiter 7.1 zwischen dem Sensorbereich S und der ersten Seitenkante S1 der Verbundscheibe 10 angeordnet ist und der zweite Sammelleiter 7.2 zwischen dem Sensorbereich S und der zweiten Seitenkante S2. Die Sammelleiter 7.1, 7.2 sind beispielsweise in Form eines Siebdrucks ausgebildet, welcher Glasfritten und Silberpartikel enthält und auf die elektrisch leitfähige Beschichtung 20 aufgedruckt ist. Alternativ können metallische Folie, beispielsweise verzinnte Kupferfolien als Sammelleiter 7.1, 7.2 verwendet werden, welche auf die elektrisch leitfähige Beschichtung 20 aufgelegt und optional mit dieser verlötet werden. Die Sammelleiter 7.1, 7.2 sind dafür vorgesehen, mit einer Spannungsquelle verbunden zu werden (insbesondere der Bordspannung des Personenkraftwagens), so dass ein Strompfad für einen Heizstrom gebildet wird, welcher zwischen den Sammelleitern 7.1, 7.2 über den Sensorbereich S verläuft. Jeder Sammelleiter 7.1, 7.2 ist dazu mit einem nicht dargestellten Flachleiter kontaktiert, welcher sich über die Oberkante O der Verbundscheibe 10 hinaus erstreckt und an Kabel zur Verbindung mit der Spannungsquelle angeschlossen werden kann.

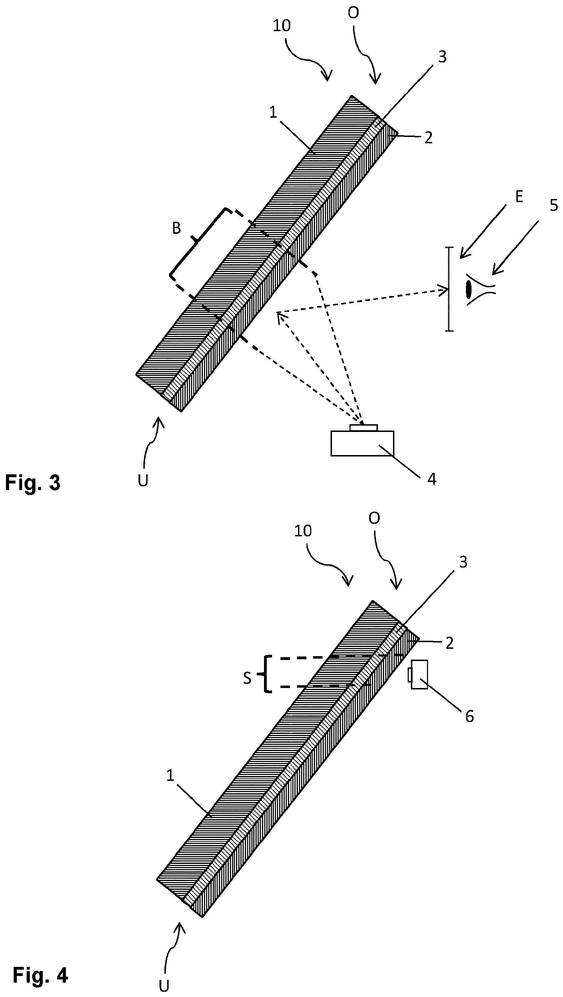

Figur 3 und Figur 4 zeigen jeweils einen Querschnitt durch die Verbundscheibe 10 aus den Figuren 1 und 2 als Teil einer erfindungsgemäßen Projektionsanordnung. Der Querschnitt der Figur 3 verläuft dabei durch den HUD-Bereich B, der Querschnitt der Figur 4 durch den Sensorbereich S. Die elektrisch leitfähige Beschichtung 20 ist der Einfachheit halber nicht dargestellt.

Die Projektionsanordnung umfasst die Verbundscheibe 10 und einen HUD-Projektor 4, welcher auf den HUD-Bereich B der Verbundscheibe 10 gerichtet ist (Figur 3). Dort wird die Strahlung des HUD-Projektors 4 durch die elektrisch leitfähige Beschichtung 20 reflektiert, so dass ein HUD-Bild erzeugt wird, welche von einem Betrachter 5 (Fahrzeugfahrer) als virtuelle Bilder auf der von ihm abgewandten Seite der Verbundscheibe 10 wahrgenommen werden, wenn sich seine Augen innerhalb der sogenannten Eyebox E befinden. Der Strahlung des HUD-Projektors 4 ist p-polarisiert, insbesondere im Wesentlichen rein p-polarisiert. Da der HUD-Projektor 4 die Verbundscheibe 10 mit einem Einfallswinkel nahe dem Brewster-Winkel bestrahlt (in der schematischen Zeichnung nicht realistisch dargestellt), wird die Strahlung des Projektors 4 nur unwesentlich an den externen Oberflächen I, IV der Verbundscheibe 10 reflektiert. Die Reflexionsbeschichtung 20 dagegen ist auf die Reflexion p-polarisierter Strahlung optimiert. Sie dient als Reflexionsfläche für die Strahlung des HUD-Projektors 4 zur Erzeugung der HUD-Projektion.

Innenraumseitig zum Sensorbereich S ist ein Sensor 6 angeordnet, welcher von außen durch den Sensorbereich S tretende elektromagnetische Strahlung (beispielsweise Licht, IR-Strahlung oder Radarstrahlung) detektieren kann (Figur 4). Der Sensor 6 ist beispielsweise in einem nicht dargestellten Gehäuse angeordnet, welches an der innenraumseitigen Oberfläche IV der Innenscheibe 2 angebracht, beispielsweise angeklebt ist. Der Sensor 6 ist im Wesentlichen horizontal nach vorne (bezogen auf die Fahrtrichtung) durch die Verbundscheibe 10 gerichtet.

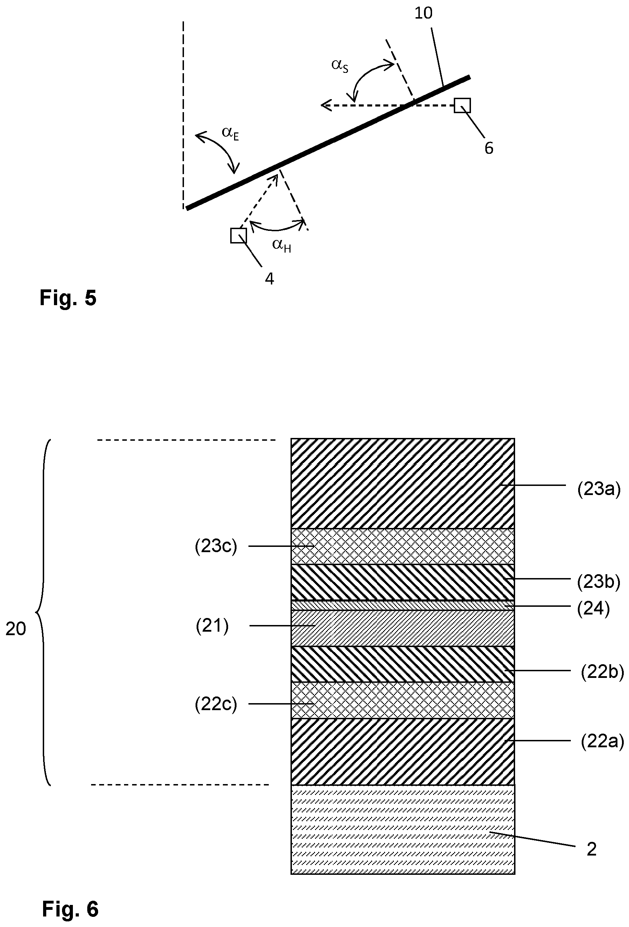

Figur 5 veranschaulicht einige Winkel, welche in der erfindungsgemäßen Projektionsanordnung auftreten. Die Verbundscheibe 10 ist eine Windschutzscheibe, die mit einem Einbauwinkel $\alpha_E$ im Fahrzeug eingebaut ist. Der Einbauwinkel $\alpha_E$ wird zur Vertikalen gemessen und beträgt beispielhaft 65°. Vom Einbauwinkel $\alpha_E$ ist der Einfallswinkel $\alpha_S$ abhängig, mit dem von außen horizontal durch die Verbundscheibe 10 tretende Strahlung, die dann vom Sensor 6 detektiert wird, auf die außenseitige Oberfläche I der Verbundscheibe 10 trifft. Der Einfallswinkel $\alpha_S$ ist der Winkel der außenseitigen Flächennormalen der außenseitigen Oberfläche I der Außenscheibe 1 und der Horizontalen. Aus einfachen geometrischen Überlegungen ergibt ist, dass der Einfallswinkel $\alpha_S$ dem Einbauwinkel $\alpha_E$ entspricht (zumindest im dargestellten vereinfachten Fall einer planen Verbundscheibe 10). Die Strahlung des HUD-Projektors 4 trifft mit einem Einstrahlwinkel $\alpha_H$ auf die Verbundscheibe 10, welcher beispielhaft 65° beträgt. Der Einstrahlwinkel ist der Winkel zwischen der Projektorstrahlung und der innenraumseitigen Flächennormalen der innenraumseitigen Oberfläche IV der Innenscheibe im geometrischen Zentrum des HUD-Bereichs B.

Im Gegensatz zur vereinfachten Darstellung in der Figur sind reale Windschutzscheibe nicht plan, sondern gebogen ausgebildet. Daraus resultiert eine Ortsabhängigkeit der dargestellten Winkel. Der zur quantitativen Charakterisierung herangezogene Einfallswinkel $\alpha_S$ wird im geometrischen Zentrum des Sensorbereichs S gemessen, der Einstrahlwinkel $\alpha_H$ im geometrischen Zentrum des HUD-Bereichs B.

Figur 6 zeigt die Schichtenfolge einer Ausgestaltung der erfindungsgemäß elektrisch leitfähigen Beschichtung 20 (Reflexionsbeschichtung 20). Die Reflexionsbeschichtung 20 ist ein Stapel von Dünnschichten. Die Reflexionsbeschichtung 20 umfasst eine elektrisch leitfähige Schicht 21 auf Basis von Silber. Direkt oberhalb der elektrisch leitfähigen Schicht 21 ist eine metallische Blockerschicht 24 angeordnet. Darüber ist eine obere dielektrische Schichtenfolge angeordnet, die von unten nach oben aus einer oberen Anpassungsschicht 23b, einer oberen brechungsindexsteigernden Schicht 23c und einer oberen Entspiegelungsschicht 23a. Unterhalb der elektrisch leitfähigen Schicht 21 ist eine untere dielektrische Schichtenfolge angeordnet, die von oben nach unten aus einer unteren Anpassungsschicht 22b, einer unteren brechungsindexsteigernden Schicht 22c und einer unteren Entspiegelungsschicht 22a.

Der dargestellte Schichtaufbau ist lediglich beispielhaft zu versehen. So können die dielektrischen Schichtenfolgen auch mehr oder weniger Schichten umfassen, solange mindestens eine dielektrische Schicht oberhalb und unterhalb der leitfähigen Schicht 21 vorhanden ist. Die dielektrischen Schichtenfolgen müssen auch nicht symmetrisch sein. Beispielhafte Materialien und Schichtdicken können den nachfolgenden Beispielen entnommen werden.

Die Schichtenfolgen einer Verbundscheibe 10 mit der Reflexionsbeschichtung 20 auf der außenseitigen Oberfläche III der Innenscheibe 2 gemäß der erfindungsgemäßen Beispiele 1 bis 5 sind, zusammen mit den Materialien und geometrische Schichtdicken der Einzelschichten, in Tabelle 1 dargestellt. Die dielektrischen Schichten können unabhängig voneinander dotiert sein, beispielsweise mit Bor oder Aluminium.

Tabelle 1

| Material | Bezugszeichen | | Schichtdicke | | | | |
|---|---|---|---|---|---|---|---|
| | | | Beispiel 1 | Beispiel 2 | Beispiel 3 | Beispiel 4 | Beispiel 5 |
| Kalk-Natron-Glas | 1 | | 2,1 mm | 2,1 mm | 2,1 mm | 2,1 mm | 2,1 mm |
| PVB | 3 | | 0,76 mm | 0,76 mm | 0,76 mm | 0,76 mm | 0,76 mm |
| SiN | 20 | 23a | 70 nm | 70 nm | 60 nm | 60 nm | 50 nm |
| SiZrN | | 23c | - | - | - | 10 nm | - |
| ZnO | | 23b | - | - | 10 nm | 10 nm | 10 nm |
| NiCr | | 24 | 0,3 nm | 0,3 nm | 0,3 nm | 0,3 nm | 0,3 nm |
| **Ag** | | **21** | **11 nm** | **12 nm** | **12 nm** | **11 nm** | **14 nm** |
| ZnO | | 22b | - | - | 10 nm | 10 nm | 10 nm |
| SiZrN | | 22c | - | - | - | 10 nm | - |
| SiN | | 22a | 30 nm | 35 nm | 25 nm | 20 nm | 25 nm |
| Kalk-Natron-Glas | 2 | | 2,1 mm | 2,1 mm | 2,1 mm | 2,1 mm | 2,1 mm |

Zum Vergleich wurden Vergleichsbeispiele 1 bis 4 untersucht, die nicht die erfindungsgemäßen Merkmale erfüllen. Ihre Schichtenfolgen sind in Tabelle 2 dargestellt.

Tabelle 2

| Material | Bezugszeichen | Schichtdicke | | | |
|---|---|---|---|---|---|
| | | Vergleichsbeispiel 1 | Vergleichsbeispiel 2 | Vergleichsbeispiel 3 | Vergleichsbeispiel 4 |
| Kalk-Natron-Glas | 1 | 2,1 mm | 2,1 mm | 2,1 mm | 2,1 mm |

(fortgesetzt)

| Material | Bezugszeichen | | Schichtdicke | | | |
|---|---|---|---|---|---|---|
| | | | Vergleichsbeispiel 1 | Vergleichsbeispiel 2 | Vergleichsbeispiel 3 | Vergleichsbeispiel 4 |
| PVB | 3 | | 0,76 mm | 0,76 mm | 0,76 mm | 0,76 mm |
| SiN | 20 | 23a | 50 nm | 35 nm | 30 nm | 40 nm |
| SiZrN | | 23c | - | - | 10 nm | 10 nm |
| ZnO | | 23b | - | 10 nm | 10 nm | 10 nm |
| NiCr | | 24 | 0,3 nm | 0,3 nm | 0,3 nm | 0,3 nm |
| **Ag** | | **21** | **12 nm** | **13 nm** | **13 nm** | **13 nm** |
| ZnO | | 22b | - | 10 nm | 10 nm | 10 nm |
| SiZrN | | 22c | - | - | 10 nm | 10 nm |
| SiN | | 22a | 50 nm | 35 nm | 50 nm | 40 nm |
| Kalk-Natron-Glas | 2 | | 2,1 mm | 2,1 mm | 2,1 mm | 2,1 mm |

Die Beispiele und die Vergleichsbeispiele unterscheiden sich in erster Linie durch das Verhältnis der optischen Dicke der oberen dielektrischen Schichtenfolge zur optischen Dicke der unteren dielektrischen Schichtenfolge. Die optische Dicke ergibt sich jeweils als Produkt aus der in den Tabellen 1 und 2 dargestellten geometrischen Dicke und dem Brechungsindex (SiN: 2,0; SiZrN: 2,2, ZnO: 2,0). Die optischen Dicken und ihr Verhältnis sind in Tabelle 3 zusammengefasst. Das Verhältnis $\phi$ beschreibt das Verhältnis der optischen Dicke der oberen dielektrischen Schicht 23a bzw. Schichtfolge 23a, 23b, ggf. 23c zur optischen Dicke der unteren dielektrischen Schicht 22a oder Schichtfolge 22a, 22b, ggf. 22c.

Tabelle 3

| | optische Dicke der oberen dielektrischen Schichtenfolge | optische Dicke der unteren dielektrischen Schichtenfolge | Verhältnis $\phi$ |
|---|---|---|---|
| Beispiel 1 | 140 | 60 | 2,33 |
| Beispiel 2 | 140 | 70 | 2,00 |
| Beispiel 3 | 140 | 70 | 2,00 |
| Beispiel 4 | 162 | 82 | 1,98 |
| Beispiel 5 | 120 | 70 | 1,71 |
| Beispiel 6 | 130 | 72 | 1,8 |
| Vergleichsbeispiel 1 | 100 | 100 | 1,00 |
| Vergleichsbeispiel 2 | 90 | 90 | 1,00 |
| Vergleichsbeispiel 3 | 102 | 142 | 0,72 |
| Vergleichsbeispiel 4 | 122 | 122 | 1,00 |

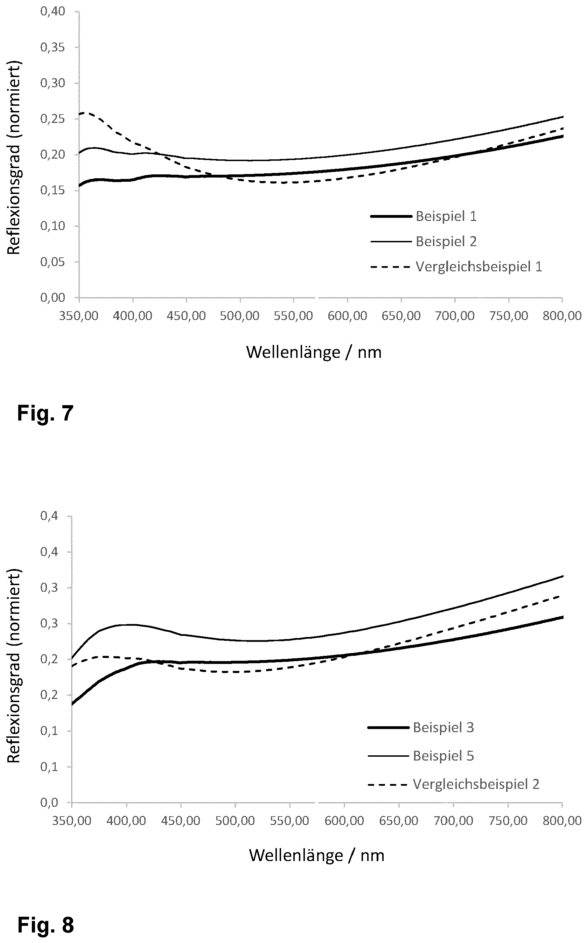

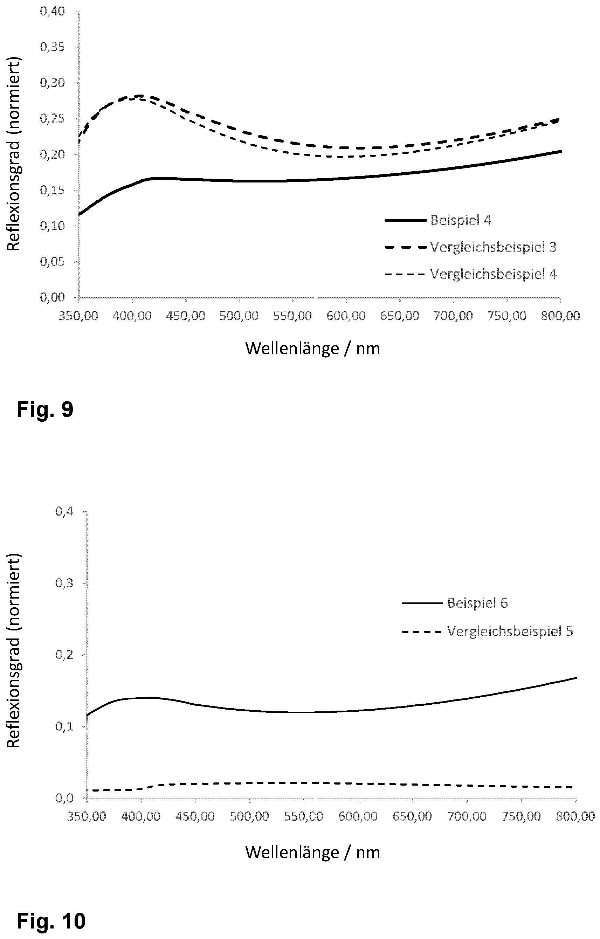

Figur 7, Figur 8 und Figur 9 zeigen Reflexionsspektren von Verbundscheiben 10 wie in Figur 2, jeweils mit einem Schichtaufbau gemäß der erfindungsgemäßen Beispiele 1 bis 5 nach Tabelle 1 sowie gemäß der Vergleichsbeispiele 1 bis 4 nach Tabelle 2. Die Reflexionsspektren wurden mit einer Lichtquelle, die im betrachteten Spektralbereich p-polarisierte Strahlung gleichmäßiger Intensität ausstrahlt, aufgenommen, bei Bestrahlung über die Innenscheibe 2 (die sogenannte innenraumseitige Reflexion) unter einem Einstrahlwinkel von 65° zur innenraumseitigen Flächennormalen. Die Reflexionsmessung ist also der Situation in der Projektionsanordnung angenähert. Der besseren Übersichtlichkeit halber sind jeweils die Beispiele und Vergleichsbeispiele zusammengefasst, die einen ähnlichen Schichtaufbau aufwiesen. In Figur 7 sind die Beispiele 1 und 2 und das Vergleichsbeispiel 1 dargestellt, die jeweils nur über dielektrische Entspiegelungsschichten 22a, 23a verfügen. In Figur 8 sind die Beispiele 3 und 5 und das Vergleichsbeispiel 2 dargestellt, die jeweils über dielektrische Entspiegelungsschichten 22a, 23a und Anpassungsschichten 22b, 23b verfügen. In Figur 9 sind das Beispiel 4 und die Vergleichsbeispiele 3 und 4 dargestellt, die jeweils über dielektrische Entspiegelungsschichten 22a, 23a, Anpassungsschichten 22b, 23b und brechungsindexsteigernde Schichten 22c, 23c verfügen.

Bereits aus der graphischen Darstellung der Spektren ist ersichtlich, dass die erfindungsgemäßen Beispiele mit dem erfindungsgemäßen Verhältnis der optischen Dicken von oberer und unterer dielektrischer Schicht beziehungsweise Schichtenfolge zu einem wesentlich glatteren Spektrum im interessierenden Spektralbereich von 400 nm bis 680 nm führen. Dadurch wird eine farbneutralere Darstellung der HUD-Projektion sichergestellt. Außerdem wird der generelle Farbeindruck der Scheibe verbessert.

Der gemittelte Reflexionsgrad gegenüber p-polarisierter Strahlung sowie die Differenzen der Maximal- und Minimalwerte zum gemittelten Reflexionsgrad der Beispiele 1 bis 5 sind in Tabelle 4 zusammengefasst, die entsprechenden Werte für die Vergleichsbeispiel 1 bis 4 in Tabelle 5. Außerdem ist jeweils die Standardabweichung des Reflexionsspektrums angegeben. Die Analysen beziehen sich jeweils auf den Spektralbereich von 400 nm bis 680 nm.

Tabelle 4

|  | Beispiel 1 | Beispiel 2 | Beispiel 3 | Beispiel 4 | Beispiel 5 | Beispiel 6 |
|---|---|---|---|---|---|---|
| gemittelten Reflexionsgrad gegenüber p-polarisierter Strahlung, 400 nm-680 nm | 17,6% | 19,9% | 20,2% | 16,6% | 23,8% | 12,7% |
| Differenz zwischen dem maximal auftretenden Reflexionsgrad und dem Mittelwert | 1,8% | 1,7% | 2,0% | 1,1% | 2,6% | 1,4% |
| Differenz zwischen dem minimal auftretenden Reflexionsgrad und dem Mittelwert | 1,1% | 0,7% | 1,5% | 0,9% | 1,2% | 0,7% |
| Standardabweichung, 400 nm-680 nm | 0,55% | 0,48% | 0,60% | 0,27% | 1,08% | 0,65% |

Tabelle 5

|  | Vergleichs-beispiel 1 | Vergleichs-beispiel 2 | Vergleichs-beispiel 3 | Vergleichs-beispiel 4 | Vergleichs-beispiel 5 |
|---|---|---|---|---|---|
| gemittelter Reflexionsgrad gegenüber p-polarisierter Strahlung, 400 nm-680 nm | 17,6% | 19,8% | 23,1% | 22,0% | 2,0% |
| Differenz zwischen dem maximal auftretenden Reflexionsgrad und dem Mittelwert | 4,2% | 3,6% | 5,1% | 5,8% | 0,1% |
| Differenz zwischen dem minimal auftretenden Reflexionsgrad und dem Mittelwert | 1,4% | 1,6% | 2,2% | 2,3% | 0,7% |
| Standardabweichung, 400 nm-680 nm | 1,49% | 1,11% | 2,52% | 2,70% | 0,16% |

Bei den Vergleichsbeispielen sind zwar auch relativ hohe gemittelte Reflexionswerte erreichbar, jedoch sind die Spektren im relevanten Spektralbereich von 400 nm bis 680 nm starken Schwankungen unterworfen, was zu unerwünschten Farbverschiebungen des HUD-Bildes führen kann sowie zu einem schlechteren Farbeindruck der Scheibe für den Betrachter. Im Gegensatz dazu bewirkt das Verhältnis der optischen Dicken von unterer und oberer dielektrischer Schicht/Schichtenfolge der erfindungsgemäßen Beispiele eine deutliche Glättung des Reflexionsspektrums, was zu einer farbneutraleren Widergabe des Projektorbildes und einem farbneutraleren Gesamteindruck führt.

Die Schichtenfolge einer Verbundscheibe 10 mit der Reflexionsbeschichtung 20 auf der außenseitigen Oberfläche III der Innenscheibe 2 gemäß eines weiteren erfindungsgemäßen Beispiels 6 ist, zusammen mit den Materialien und geometrische Schichtdicken der Einzelschichten, in Tabelle 6 dargestellt. Die dielektrischen Schichten können unabhängig voneinander dotiert sein, beispielsweise mit Bor oder Aluminium.

Tabelle 6

| Material | Bezugszeichen | | Schichtdicke |
|---|---|---|---|
| | | | Beispiel 6 |
| Kalk-Natron-Glas | 1 | | 2,1 mm |
| PVB | 3 | | 0,76 mm |
| SiN | 20 | 23a | 55 nm |
| SiZrN | | 23c | - |
| ZnO | | 23b | 10 nm |
| NiCr | | 24 | 0,3 nm |
| **Ag** | | **21** | **10 nm** |
| ZnO | | 22b | 10 nm |
| SiZrN | | 22c | 10 nm |
| SiN | | 22a | 15 nm |
| Kalk-Natron-Glas | 2 | | 1,6 mm |

Die Außenscheibe 1 und die Innenscheibe 1 des Beispiels 6 waren wiederum aus klarem Kalk-Natron-Glas gefertigt. Zum Vergleich wurde ein Vergleichsbeispiel 5 untersucht. Das Vergleichsbeispiel 5 wies keine elektrisch leitfähige Beschichtung 20 auf, die Dicken der Außenscheibe 1 und der Innenscheibe 2 entsprachen denen des Beispiels 6. Im Unterschied dazu war die Außenscheibe 1 aus grün gefärbtem Kalk-Natron-Glas gefertigt, während die Innenscheibe 2 aus klarem Kalk-Natron-Glas gefertigt war.

In Tabelle 7 werden Transmissionswerte unter verschiedenen Einstrahlwinkeln (zur außenseitigen Flächennormalen) der Beispiele und Vergleichsbeispiele miteinander verglichen. Die Transmissionswerte wurden mit der Lichtart A gemessen, der angegebene Winkel gibt den Einstrahlwinkel an.

Alle Scheiben wiesen eine Lichttransmission bei einem Einstrahlwinkel von 0° von größer als 70% auf, so dass sie als Windschutzscheibe eingesetzt werden können.

Aus dem Vergleich der Beispiele 1 bis 6 geht weiter hervor, dass die Lichttransmission unter Einstrahlwinkeln größer 0° umso höher ist, je dünner die Silberschicht ausgebildet ist. Das ist vorteilhaft hinsichtlich der Funktionsfähigkeit des Sensors.

Bei einem Einstrahlwinkel von 0° (das Licht trifft senkrecht auf die Verbundscheibe 10) ist die Transmission des Beispiels 6 und des Vergleichsbeispiels 5 vergleichbar. Bei wachsendem Einstrahlwinkel ist die Transmission des Beispiels 6 jedoch signifikant höher. Da die durch den Sensor 6 detektierte Strahlung mit einem Winkel durch die Verbundscheibe 10 tritt, der typischerweise im Bereich der angegebenen Werte liegt, ist die Detektionseffizienz des Beispiels 6 deutlich höher.

Außerdem wird das Polarisationsverhältnis miteinander verglichen, definiert als Verhältnis der Transmission von p-polarisierter Strahlung TL(p-pol) zur Transmission von s-polarisierter Strahlung TL(s-pol), hier gemessen bei einem Einstrahlwinkel von 70°. Es ist zu erkennen, dass die erfindungsgemäßen Beispiele tendenziell ein signifikant höheres Polarisationsverhältnis aufweisen als die Vergleichsbeispiele, so das s-polarisierte Reflexionen, beispielsweise an einer feuchten Fahrbahn, weniger störend auf den Sensor 6 wirken. Insbesondere beim Vergleich des Beispiels 6 mit den Vergleichsbeispielen 1 und 5, welche im Wesentlichen dieselbe Lichttransmission (0°) aufweisen, ist der vorteilhafte Einfluss des erfindungsgemäßen Schichtaufbaus auf das Polarisationsverhältnis erkennbar.

Tabelle 7

| | TL A (0°) | TL A (60°) | TL A (70°) | TL A (73,5°) | $\frac{TL\,(p-pol)}{TL\,(s-pol)}(70°)$ |
|---|---|---|---|---|---|
| Beispiel 1 | 73,5 % | 68,1 % | 59,2 % | 53,7 % | 1,68 |
| Beispiel 2 | 72,6 % | 67,2 % | 58,3 % | 52,9 % | 1,64 |
| Beispiel 3 | 71,9 % | 66,7 % | 58,0 % | 52,6 % | 1,64 |
| Beispiel 4 | 73,9 % | 68,7 % | 59,7 % | 54,1 % | 1,66 |
| Beispiel 5 | 71,2 % | 65,0 % | 56,2 % | 51,0 % | 1,56 |

(fortgesetzt)

| | TL A (0°) | TL A (60°) | TL A (70°) | TL A (73,5°) | $\frac{TL\,(p-pol)}{TL\,(s-pol)}(70°)$ |
|---|---|---|---|---|---|
| Beispiel 6 | 80,0 % | 73,4 % | 63,1 % | 56,9% | 1,67 |
| Vergleichsbeispiel 1 | 80,1 % | 72,6 % | 62,0 % | 55,8 % | 1,58 |
| Vergleichsbeispiel 2 | 78,5 % | 70,3 % | 60,0 % | 54,1 % | 1,56 |
| Vergleichsbeispiel 3 | 73,2 % | 68,3 % | 59,0 % | 53,4 % | 1,56 |
| Vergleichsbeispiel 4 | 74,2 % | 69,4 % | 59,8 % | 54,1 % | 1,54 |
| Vergleichsbeispiel 5 | 80,1 % | 71,3 % | 60,4 % | 53,9 % | 1,49 |

Figur 10 zeigen Reflexionsspektren des Beispiels 6 nach Tabelle 6 und des Vergleichsbeispiels 5. Die Reflexionsspektren wurden unter den gleichen Bedingungen aufgenommen wie die Reflexionsspektren der Figuren 7 bis 9. Da das Vergleichsbeispiel 5 keine Reflexionsbeschichtung 20 aufwies, tritt erwartungsgemäß kein zufriedenstellender Reflexionsgrad gegenüber p-polarisierter Strahlung auf. Dagegen werden mit dem Beispiel 6 gute Werte erzielt. Die quantitative Analyse der Reflexionsspektren sind in den Tabellen 4 und 5 angegeben, die optischen Dicken des Beispiels 6 in Tabelle 3.

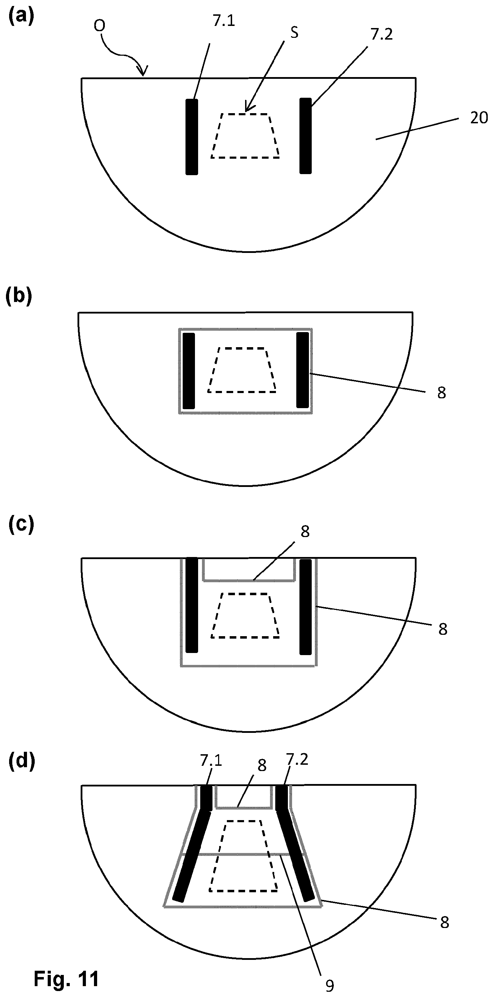

Figur 11 zeigt verschiedene Ausgestaltungen des beheizbaren Sensorbereichs S der erfindungsgemäßen Verbundscheibe. In der Ausgestaltung der Figur 11a sind die Sammelleiter 7.1, 7.2 mit dem Bereich der Beschichtung 20 verbunden, der beheizt werden soll und den Sensorbereich S enthält, ohne dass der besagte Bereich von der umliegenden Beschichtung isoliert ist. Wird an die Sammelleiter 7.1, 7.2 eine Spannung angelegt, so fließt ein Heizstrom durch den zwischenliegenden Bereich der Beschichtung 20, so dass das Sensorfenster S beheizt wird.

In der Ausgestaltung der Figur 11b ist ein Bereich der Beschichtung 20, welcher den Sensorbereich S enthält, durch eine Isolierungslinie 8 von den umliegenden Bereichen der Beschichtung 20 stofflich getrennt und daher elektrisch isoliert. Die Isolierungslinie 8 ist als umlaufende Linie ausgebildet, die eine beispielhaft rechteckige Form umschließt. Der von der Isolierungslinie 8 begrenzte Bereich (Heizbereich) ist vollständig von weiteren Bereichen der Beschichtung 20 umgeben. Die Sammelleiter 7.1, 7.2 sind vollständig innerhalb des Heizbereichs angeordnet. Durch die Isolierungslinien 8 wird der Heizstrom auf den zur Beheizung vorgesehenen Bereich beschränkt, ein "Ausstrahlen" des Heizstroms kann verhindert werden. Die Isolierungslinie 8 ist beispielsweise durch Laserentschichtung erzeugt.

In Figur 11c ist eine weitere Ausgestaltung der Abtrennung des Heizbereichs durch Isolierungslinien 8 dargestellt. Ein Bereich der Beschichtung 20, welche die Sammelleiter 7.1, 7.2 und das Sensorfenster S enthält, ist von den umliegenden Bereichen durch eine erste ("äußere") Isolierungslinie 8 von den umliegenden Bereichen der Beschichtung 20 isoliert. Der Anfang und das Ende dieser ersten Isolierungslinie 8 liegt an der Kante der Beschichtung 20. Dieser abgetrennte, beispielhaft rechteckige Bereich grenzt an die besagte Kante der Beschichtung 20 an, welche in der Darstellung mit der Oberkante O der Verbundscheibe zusammenfällt, während in der Realität häufig ein unbeschichteter Randbereich vorhanden ist, so dass die Isolierungslinie 8 nicht bis zur Oberkante O verläuft, sondern nur bis zur dieser zugewandten Kante der Beschichtung 20. Diese Ausgestaltung hat den Vorteil, dass sich die Sammelleiter 7.1, 7.2 bis zu der oder nahe an die Oberkante O der Verbundscheibe erstrecken können, was vorteilhaft hinsichtlich ihres elektrischen Anschlusses ist. Zwischen den Sammelleitern ist ein weiterer, an die Kante angrenzender Bereich der Beschichtung 20 durch eine zweite ("innere") Isolierungslinie 8 vom Heizbereich ausgenommen. Auch der Anfang und das Ende dieser zweiten Isolierungslinie 8 liegt an der Kante der Beschichtung 20. Beide Isolierungslinien 8 weisen ausgehend von der Kante der Beschichtung 20 jeweils zwei Endabschnitte auf, die parallel zu den Sammelleitern 7.1, 7.2 verlaufen und einen dazwischenliegenden Mittelabschnitt, der im Wesentlichen parallel zum Strompfad verläuft. Der eigentliche Heizbereich wird dann einerseits durch die Sammelleiter 7.1, 7.2, andererseits durch die Mittelabschnitte der Isolierungslinien 8 begrenzt.

Die Abtrennung des Heizbereich von der umliegenden Beschichtung 20 ist in Figur 11d ähnlich realisiert wie in Figur 11c mit zwei Isolierungslinien 8. Eine weitere Isolierungslinie 9 verläuft durch den Heizbereich im Wesentlichen parallel zur gewünschten Stromrichtung. Durch die Isolierungslinie 9 kann der Stromfluss gezielt gelenkt werden. Dies ist insbesondere dann vorteilhaft, wenn die Sammelleiter 7.1, 7.2 wie im dargestellten Fall nicht parallel zueinander verlaufen, so dass ihr Abstand und daher der zwischen ihnen befindliche elektrische Widerstand nicht konstant ist. Durch die Lenkung des Strompfades durch die Isolierungslinie 9 kann sichergestellt werden, dass der gesamte Sensorbereich S möglichst gleichmäßig beheizt wird. Statt nur einer können auch mehrere Isolierungslinien 9 vorhanden sein.

Bezugszeichenliste:

(10)    Verbundscheibe

(1)     Außenscheibe
(2)     Innenscheibe
(3)     thermoplastische Zwischenschicht
(4)     Projektor
(5)     Betrachter / Fahrzeugfahrer
(6)     Sensor
(7.1)   erster Sammelleiter
(7.2)   zweiter Sammelleiter
(8)     Isolierungslinie zur Abgrenzung der beheizten Beschichtung 20 im Sensorbereich S von der umliegenden Beschichtung 20
(9)     Isolierungslinie zur Führung des Strompfades innerhalb des Sensorbereichs S

(20)    elektrisch leitfähige Beschichtung / Reflexionsbeschichtung
(21)    elektrisch leitfähige Schicht
(22a)   erste untere dielektrische Schicht / Entspiegelungsschicht
(22b)   zweite untere dielektrische Schicht / Anpassungsschicht
(22c)   dritte untere dielektrische Schicht / brechungsindexsteigernde Schicht
(23a)   erste obere dielektrische Schicht / Entspiegelungsschicht
(23b)   zweite obere dielektrische Schicht / Anpassungsschicht
(23c)   dritte obere dielektrische Schicht / brechungsindexsteigernde Schicht
(24)    metallische Blockerschicht

(O)     Oberkante der Verbundscheibe 10
(U)     Unterkante der Verbundscheibe 10
(S1)    erste Seitenkante der Verbundscheibe 10
(S2)    zweite Seitenkante der Verbundscheibe 10
(B)     HUD-Bereich der Verbundscheibe 10
(E)     Eyebox
(S)     Sensorbereich der Verbundscheibe 10

(I)     außenseitige Oberfläche der Außenscheibe 1
(II)    innenraumseitige Oberfläche der Außenscheibe 1
(III)   außenseitige Oberfläche der Innenscheibe 2
(IV)    innenraumseitige Oberfläche der Innenscheibe 2

($\alpha_E$)    Einbauwinkel der Verbundscheibe 10 zur Vertikalen
($\alpha_S$)    Einfallswinkel der durch den Sensor 6 detektierten Strahlung
($\alpha_H$)    Einstrahlwinkel des HUD-Projektors 4

**Patentansprüche**

1.  Projektionsanordnung für ein Head-Up-Display (HUD), mindestens umfassend

   - eine Verbundscheibe (1) mit beheizbarem Sensorbereich (S), umfassend

      - eine Außenscheibe (1) mit einer außenseitigen Oberfläche (I) und einer innenraumseitigen Oberfläche (II), eine Innenscheibe (2) mit einer außenseitigen Oberfläche (III) und einer innenraumseitigen Oberfläche (IV), wobei die innenraumseitige Oberfläche (II) der Außenscheibe (1) mit der außenseitigen Oberfläche (III) der Innenscheibe (2) über eine thermoplastische Zwischenschicht (3) verbunden ist,
      - eine elektrisch leitfähige Beschichtung (20) auf der innenraumseitigen Oberfläche (II) der Außenscheibe (1), auf der außenseitigen Oberfläche (III) der Innenscheibe (2) oder innerhalb der Zwischenschicht (3),

wobei die Verbundscheibe (10)

- einen HUD-Bereich (B) aufweist, der zur Bestrahlung durch einen HUD-Projektor (4) mit p-polarisierter Strahlung vorgesehen ist, und
- einen Sensorbereich (S) aufweist, der zur Transmission von elektromagnetischer Strahlung für einen auf die innenraumseitige Oberfläche (IV) der Innenscheibe (2) gerichteten Sensor (6) vorgesehen ist und der vom HUD-Bereich (B) räumlich getrennt ist,

und wobei

- die elektrisch leitfähige Beschichtung (20) geeignet ist, die Strahlung des HUD-Projektors (4) zu reflektieren,
- die elektrisch leitfähige Beschichtung (20) genau eine elektrisch leitfähige Schicht (21) auf Basis von Silber aufweist,
- unterhalb der elektrisch leitfähigen Schicht (21) eine untere dielektrische Schicht (22a) oder Schichtenfolge (22a, 22b, 22c) angeordnet ist, deren Brechungsindex mindestens 1,9 beträgt, bezogen auf eine Wellenlänge von 550 nm,
- oberhalb der elektrisch leitfähigen Schicht (21) eine obere dielektrische Schicht (23a) oder Schichtenfolge (23a, 23b, 23c) angeordnet ist, deren Brechungsindex mindestens 1,9 beträgt, bezogen auf eine Wellenlänge von 550 nm,
- das Verhältnis der optischen Dicke der oberen dielektrischen Schicht (23a) oder Schichtenfolge (23a, 23b, 23c) zur optischen Dicke der unteren dielektrischen Schicht (22a) oder Schichtenfolge (22a, 22b, 22c) mindestens 1,7 beträgt,

und wobei beidseitig des Sensorbereichs (S) jeweils ein zum Anschluss an eine Spannungsquelle vorgesehener Sammelleiter (7.1, 7.2) angeordnet und derart mit der elektrisch leitfähigen Beschichtung (20) verbunden ist, dass zwischen den Sammelleitern (7.1, 7.2) ein über den Sensorbereich (S) verlaufender Strompfad für einen Heizstrom geformt wird;
- einen an der innenraumseitigen Oberfläche (IV) der Innenscheibe (2) befestigten, auf den Sensorbereich (S) gerichteten Sensor (6) und
- einen HUD-Projektor (4), der auf den HUD-Bereich (B) gerichtet ist und dessen Strahlung p-polarisiert ist.

2. Projektionsanordnung nach Anspruch 1, wobei die Verbundscheibe (10) eine Oberkante (O), eine Unterkante (U) und zwei dazwischen verlaufende Seitenkanten (S1, S2) aufweist, wobei ein Sammelleiter (7.1) zwischen dem Sensorbereich (S) und der einen Seitenkante (S1) angeordnet ist und der andere Sammelleiter (7.2) zwischen dem Sensorbereich (S) und der anderen Seitenkante (S2).

3. Projektionsanordnung nach Anspruch 1 oder 2, wobei der zwischen den Sammelleitern (7.1, 7.2) angeordnete beheizte Bereich der elektrisch leitfähigen Beschichtung (20) eine Fläche von 20 cm$^2$ bis 100 cm$^2$ aufweist, während der Großteil der Verbundscheibe (10) nicht durch die elektrisch leitfähige Beschichtung (20) beheizt wird.

4. Projektionsanordnung nach einem der Ansprüche 1 bis 3, wobei ein Bereich der elektrisch leitfähigen Beschichtung (20), der die Sammelleitern (7.1, 7.2) und den zwischen ihnen befindlichen Sensorbereich (S) enthält, von der umliegenden Beschichtung (20) durch eine Isolierungslinie (8) elektrisch isoliert ist.

5. Projektionsanordnung nach einem der Ansprüche 1 bis 4, wobei die elektrisch leitfähige Schicht (21) eine geometrische Dicke von 8 nm bis 14 nm aufweist, bevorzugt von 10 nm bis 12 nm, besonders bevorzugt von 10 nm bis 11 nm.

6. Projektionsanordnung nach einem der Ansprüche 1 bis 5, wobei

- die optische Dicke der oberen dielektrischen Schicht (23a) oder Schichtenfolge (23a, 23b, 23c) von 100 nm bis 200 nm beträgt, bevorzugt von 130 nm bis 170 nm, und
- die optische Dicke der unteren dielektrischen Schicht (22a) oder Schichtenfolge (22a, 22b, 22c) von 50 nm bis 100 nm beträgt, bevorzugt von 60 nm bis 90 nm.

7. Projektionsanordnung nach einem der Ansprüche 1 bis 6, wobei die obere dielektrische Schicht (23a) oder Schichtenfolge (23a, 23b, 23c) und die untere dielektrische Schicht (22a) oder Schichtenfolge (22a, 22b, 22c) unabhängig voneinander jeweils aufweisen:

- eine Entspiegelungsschicht (22a, 23a) auf Basis von Siliziumnitrid,
- optional eine Anpassungsschicht (22b, 23b) auf Basis von Zinkoxid und
- optional eine brechungsindexsteigernde Schicht (22c, 23c) auf Basis eines Silizium-Metall-Mischnitrids.

8. Projektionsanordnung nach einem der Ansprüche 1 bis 7, wobei die Außenscheibe (1) und die Innenscheibe (2) aus klarem Kalk-Natron-Glas gefertigt sind.

9. Projektionsanordnung nach einem der Ansprüche 1 bis 8, wobei die Verbundscheibe (10) eine Fahrzeug-Windschutzscheibe ist, wobei der Sensorbereich (S) außerhalb und der HUD-Bereich (B) zumindest teilweise innerhalb des Sichtfelds B oder I nach ECE-R43 angeordnet ist, wobei das Sichtfeld B oder I nicht durch die Beschichtung (20) beheizt wird.

10. Projektionsanordnung nach einem der Ansprüche 1 bis 9, wobei der Sensor (6) ein IR-Sensor, ein Lichtsensor, ein UV-Sensor, eine Kamera, ein Radarsystem oder ein Lidar-System ist.

11. Projektionsanordnung nach einem der Ansprüche 1 bis 10, wobei die Strahlung des Projektors (4) mit einem Einfallswinkel von 60° bis 70° auf die Windschutzscheibe (10) trifft.

**Claims**

1. Projection assembly for a head-up display (HUD), at least comprising

- a laminated pane (1) having a heatable sensor region (S), comprising
- an outer pane (1) having an outer surface (I) and an interior-side surface (II), an inner pane (2) having an outer surface (III) and an interior-side surface (IV), wherein the interior-side surface (II) of the outer pane (1) is connected to the outer surface (III) of the inner pane (2) via a thermoplastic intermediate layer (3),
- an electrically conductive coating (20) on the interior-side surface (II) of the outer pane (1), on the outer surface (III) of the inner pane (2) or within the intermediate layer (3),

wherein the laminated pane (10)

- comprises an HUD region (B) which is intended for irradiation by a HUD projector (4) using p-polarised radiation, and
- comprises a sensor region (S) which is intended for transmitting electromagnetic radiation for a sensor (6) directed towards the interior-side surface (IV) of the inner pane (2) and which sensor region is spatially separate from the HUD region (B),

and wherein

- the electrically conductive coating (20) is suitable for reflecting the radiation of the HUD projector (4),
- the electrically conductive coating (20) has exactly one electrically conductive layer (21) based on silver,
- a lower dielectric layer (22a) or layer sequence (22a, 22b, 22c) is arranged below the electrically conductive layer (21), the refractive index of which lower dielectric layer or layer sequence is at least 1.9, based on a wavelength of 550 nm,
- an upper dielectric layer (23a) or layer sequence (23a, 23b, 23c) is arranged above the electrically conductive layer (21), the refractive index of which upper dielectric layer or layer sequence is at least 1.9, based on a wavelength of 550 nm,
- the ratio of the optical thickness of the upper dielectric layer (23a) or layer sequence (23a, 23b, 23c) to the optical thickness of the lower dielectric layer (22a) or layer sequence (22a, 22b, 22c) is at least 1.7,

and wherein a bus bar (7.1, 7.2) provided for connecting to a voltage source is arranged on each side of the sensor region (S) and the bus bars are connected to the electrically conductive coating (20) in such a way that a current path for a heating current extending across the sensor region (S) is formed between the bus bars (7.1, 7.2);

- a sensor (6) attached to the interior-side surface (IV) of the inner pane (2) and directed towards the sensor region (S) and
- an HUD projector (4) which is directed towards the HUD region (B) and the radiation of which is p-polarised.

2. Projection assembly according to claim 1, wherein the laminated pane (10) comprises an upper edge (O), a lower edge (U) and two side edges (S1, S2) extending between them, wherein one bus bar (7.1) is arranged between the sensor region (S) and one side edge (S1) and the other bus bar (7.2) is arranged between the sensor region (S) and the other side edge (S2).

3. Projection assembly according to claim 1 or claim 2, wherein the heated region of the electrically conductive coating (20) arranged between the bus bars (7.1, 7.2) has a surface area of 20 cm$^2$ to 100 cm$^2$ while the majority of the laminated pane (10) is not heated by the electrically conductive coating (20).

4. Projection assembly according to any of claims 1 to 3, wherein a region of the electrically conductive coating (20) containing the bus bars (7.1, 7.2) and the sensor region (S) located between them is electrically insulated from the surrounding coating (20) by an insulation line (8).

5. Projection assembly according to any of claims 1 to 4, wherein the electrically conductive layer (21) has a geometric thickness of 8 nm to 14 nm, preferably of 10 nm to 12 nm, particularly preferably of 10 nm to 11 nm.

6. Projection assembly according to any of claims 1 to 5, wherein

- the optical thickness of the upper dielectric layer (23a) or layer sequence (23a, 23b, 23c) is from 100 nm to 200 nm, preferably from 130 nm to 170 nm, and
- the optical thickness of the lower dielectric layer (22a) or layer sequence (22a, 22b, 22c) is from 50 nm to 100 nm, preferably from 60 nm to 90 nm.

7. Projection assembly according to any of claims 1 to 6, wherein the upper dielectric layer (23a) or layer sequence (23a, 23b, 23c) and the lower dielectric layer (22a) or layer sequence (22a, 22b, 22c) each independently comprise:

- an anti-reflective layer (22a, 23a) based on silicon nitride,
- optionally a matching layer (22b, 23b) based on zinc oxide and
- optionally a layer (22c, 23c) that increases the refractive index, based on a silicon-metal mixed nitride.

8. Projection assembly according to any of claims 1 to 7, wherein the outer pane (1) and the inner pane (2) are made from clear soda lime glass.

9. Projection assembly according to any of claims 1 to 8, wherein the laminated pane (10) is a vehicle windshield, wherein the sensor region (S) is arranged outside the field of view B or I and the HUD region (B) is arranged at least partially inside the field of view according to ECE-R43, wherein the field of view B or I is not heated by the coating (20).

10. Projection assembly according to any of claims 1 to 9, wherein the sensor (6) is an IR sensor, a light sensor, a UV sensor, a camera, a radar system or a lidar system.

11. Projection assembly according to any of claims 1 to 10, wherein the radiation of the projector (4) strikes the windshield (10) at an angle of incidence of 60° to 70°.

**Revendications**

1. Agencement de projection pour un affichage tête haute (HUD), comprenant au moins

- un vitrage feuilleté (1) comportant une zone à capteur (S) pouvant être chauffée, comprenant
- une vitre externe (1) comportant une surface côté extérieur (I) et une surface côté espace intérieur (II), une vitre interne (2) comportant une surface côté extérieur (III) et une surface côté espace intérieur (IV), dans lequel la surface côté espace intérieur (II) de la vitre externe (1) est reliée à la surface côté extérieur (III) de la vitre interne (2) par l'intermédiaire d'une couche intermédiaire thermoplastique (3),
- un revêtement électroconducteur (20) sur la surface côté espace intérieur (II) de la vitre externe (1), sur la surface côté extérieur (III) de la vitre interne (2) ou à l'intérieur de la couche intermédiaire (3),

EP 4 327 156 B1

dans lequel le vitrage feuilleté (10)

- présente une zone HUD (B) prévue pour être irradiée par un projecteur HUD (4) comportant un rayonnement polarisé p, et
- présente une zone à capteur (S) prévue pour la transmission de rayonnement électromagnétique pour un capteur (6) orienté vers la surface côté espace intérieur (IV) de la vitre interne (2), et séparée spatialement de la zone HUD (B),

et dans lequel

- le revêtement électroconducteur (20) est adapté pour réfléchir le rayonnement du projecteur HUD (4),
- le revêtement électroconducteur (20) présente exactement une couche électroconductrice (21) à base d'argent,
- en dessous de la couche électroconductrice (21) est disposée une couche (22a) ou succession de couches diélectriques inférieures (22a, 22b, 22c) dont l'indice de réfraction est d'au moins 1,9 par rapport à une longueur d'onde de 550 nm,
- au-dessus de la couche électroconductrice (21) est disposée une couche (23a) ou succession de couches diélectriques supérieures (23a, 23b, 23c) dont l'indice de réfraction est d'au moins 1,9 par rapport à une longueur d'onde de 550 nm,
- le rapport entre l'épaisseur optique de la couche (23a) ou succession de couches diélectriques supérieures (23a, 23b, 23c) et l'épaisseur optique de la couche (22a) ou succession de couches diélectriques inférieures (22a, 22b, 22c) est d'au moins 1,7,

et dans lequel respectivement une barre omnibus (7.1, 7.2) prévue pour la connexion à une source de tension est disposée des deux côtés de la zone à capteur (S) et est connectée au revêtement électroconducteur (20) de telle sorte qu'un trajet de courant s'étendant sur la zone à capteur (S) pour un courant de chauffage est formé entre les barres omnibus (7.1, 7.2) ;

- un capteur (6) fixé sur la surface côté espace intérieur (IV) de la vitre interne (2) et orienté vers la zone à capteur (S), et
- un projecteur HUD (4) orienté vers la zone HUD (B) et dont le rayonnement est polarisé p.

2. Agencement de projection selon la revendication 1, dans lequel le vitrage feuilleté (10) présente un bord supérieur (O), un bord inférieur (U) et deux bords latéraux (S1, S2) s'étendant entre eux, dans lequel une barre omnibus (7.1) est disposée entre la zone à capteur (S) et un bord latéral (S1) et l'autre barre omnibus (7.2) est disposée entre la zone à capteur (S) et l'autre bord latéral (S2).

3. Agencement de projection selon la revendication 1 ou 2, dans lequel la zone chauffée du revêtement électroconducteur (20) disposée entre les barres omnibus (7.1, 7.2) présente une surface allant de 20 cm$^2$ à 100 cm$^2$, tandis que la majeure partie du vitrage feuilleté (10) n'est pas chauffée par le revêtement électroconducteur (20).

4. Agencement de projection selon l'une des revendications 1 à 3, dans lequel une zone du revêtement électroconducteur (20), laquelle contient les barres omnibus (7.1, 7.2) et la zone à capteur (S) située entre elles, est isolée électriquement du revêtement (20) environnant par une ligne d'isolation (8).

5. Agencement de projection selon l'une des revendications 1 à 4, dans lequel la couche électroconductrice (21) présente une épaisseur géométrique allant de 8 nm à 14 nm, de préférence de 10 nm à 12 nm, de manière particulièrement préférée de 10 nm à 11 nm.

6. Agencement de projection selon l'une des revendications 1 à 5, dans lequel

- l'épaisseur optique de la couche (23a) ou succession de couches diélectriques supérieures (23a, 23b, 23c) va de 100 nm à 200 nm, de préférence de 130 nm à 170 nm, et
- l'épaisseur optique de la couche (22a) ou succession de couches diélectriques inférieures (22a, 22b, 22c) va de 50 nm à 100 nm, de préférence de 60 nm à 90 nm.

7. Agencement de projection selon l'une des revendications 1 à 6, dans lequel la couche (23a) ou succession de couches diélectriques supérieures (23a, 23b, 23c) et la couche (22a) ou succession de couches diélectriques inférieures (22a, 22b, 22c) comprennent respectivement, indépendamment les unes des autres :

24

- une couche antireflet (22a, 23a) à base de nitrure de silicium,
- éventuellement une couche d'adaptation (22b, 23b) à base d'oxyde de zinc, et
- éventuellement une couche augmentant l'indice de réfraction (22c, 23c) à base d'un nitrure mixte silicium-métal.

8. Agencement de projection selon l'une des revendications 1 à 7, dans lequel la vitre externe (1) et la vitre interne (2) sont fabriquées en verre sodocalcique clair.

9. Agencement de projection selon l'une des revendications 1 à 8, dans lequel le vitrage feuilleté (10) est un pare-brise de véhicule, dans lequel la zone à capteur (S) est disposée à l'extérieur et la zone HUD (B) est disposée au moins partiellement à l'intérieur du champ de vision B ou I selon la norme ECE-R43, dans lequel le champ de vision B ou I n'est pas chauffé par le revêtement (20).

10. Agencement de projection selon l'une des revendications 1 à 9, dans lequel le capteur (6) est un capteur IR, un capteur de lumière, un capteur UV, une caméra, un système radar ou un système lidar.

11. Agencement de projection selon l'une des revendications 1 à 10, dans lequel le rayonnement du projecteur (4) frappe le pare-brise (10) à un angle d'incidence allant de 60° à 70°.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014220189 A1
- WO 2019046157 A1
- US 2017242247 A1
- WO 2020083649 A1
- WO 2021104800 A1
- WO 2010136400 A1
- WO 2022089921 A1
- EP 2510745 B1
- WO 2012031907 A1
- WO 2022157022 A1
- WO 2022136102 A1